# EUROPEAN PATENT APPLICATION

(11) **EP 4 808 231 A1**
(43) Date of publication of application: **16.09.2026**
(21) Application number: 24907851.0
(22) Date of filing: 27.11.2024
(51) Int. Cl.: H04W 64/00, H04W 24/08, G01S 5/02, G01S 5/06, H04L 5/00, H04W 88/08

(54) **ELECTRONIC DEVICE AND METHOD FOR PROVIDING ANGLE OF ARRIVAL IN WIRELESS COMMUNICATION SYSTEM**

(30) Priority: 21.12.2023 KR 20230189033
(71) Applicant: Samsung Electronics Co., Ltd., Suwon-si, Gyeonggi-do 16677 (KR)
(72) Inventor: BAE, Youngtaek, Suwon-si Gyeonggi-do 16677 (KR); KANG, Jinwhan, Suwon-si Gyeonggi-do 16677 (KR); OK, Kyusoon, Suwon-si Gyeonggi-do 16677 (KR); YUN, Yusuk, Suwon-si Gyeonggi-do 16677 (KR)
(74) Representative: Gulde & Partner
(86) International application number: PCT/KR2024/019046
(87) International publication number: WO 2025/135566

(57) **Abstract**

This electronic device may comprise: a memory for storing instructions; a transceiver; and a processor. The instructions, when executed by the at least one processor, may cause the electronic device to: acquire a first angle of arrival for a first dimension of a plurality of antennas and a second AoA for a second dimension of the plurality of antennas; identify, on the basis of a first interval between the antennas in the first dimension, one or more first candidate AOAs associated with the first AoA; determine, for each of the one or more first candidate AoAs, a correction angle for the second AoA according to the first AoA and the first candidate AoAs; identify, on the basis of the correction angle and a second interval between the antennas in the second dimension, one or more second candidate AoAs associated with the second AoA; and transmit, to a location management server via the at least one transceiver, a measurement message including the first AoA, the one or more first candidate AoAs, the second AoA, and the one or more second candidate AoAs.

## Description

### [Technical Field]

The following descriptions relate to an electronic device and a method for providing an angle of arrival in a wireless communication system.

### [Background Art]

In a wireless communication environment, user equipment (UE) may move. In order to obtain a location of the moving UE, radio signals may be used. A network node may measure an angle at which the radio signals arrive (hereinafter, an angle of arrival), through a plurality of antennas. Based on the angle of arrival of the radio signals of the UE, the location of the UE may be obtained.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, an electronic device of a digital unit (DU) is provided. The electronic device may comprise memory storing instructions, at least one transceiver, and at least one processor. The instructions, when executed by the at least one processor, may cause the electronic device to obtain a first angle of arrival (AoA) for a first dimension of a plurality of antennas and a second AoA for a second dimension of the plurality of antennas, identify at least one first candidate AoA associated with the first AoA based on a first spacing between antennas in the first dimension, for each of the at least one first candidate AoA, determine a correction angle for the second AoA in accordance with the first AoA and the first candidate AoA, identify at least one second candidate AoA associated with the second AoA based on the correction angle and a second spacing between antennas in the second dimension, and transmit, through the at least one transceiver to a location management server, a measurement message including the first AoA, the at least one first candidate AoA, the second AoA, and the at least one second candidate AoA.

In embodiments, an electronic device of a digital unit (DU) is provided. The electronic device may comprise at least one transceiver including at least one communication circuitry and at least one processor including at least one processing circuitry. The at least one processor may be configured to obtain a first angle of arrival (AoA) for a first dimension of a plurality of antennas and a second AoA for a second dimension of the plurality of antennas, identify at least one first candidate AoA associated with the first AoA based on a first spacing between antennas in the first dimension, for each of the at least one first candidate AoA, determine a correction angle for the second AoA in accordance with the first AoA and the first candidate AoA, identify at least one second candidate AoA associated with the second AoA based on the correction angle and a second spacing between antennas in the second dimension, and transmit, through the at least one transceiver to a location management server, a measurement message including the first AoA, the at least one first candidate AoA, the second AoA, and the at least one second candidate AoA.

In embodiments, a method performed by a digital unit (DU) is provided. The method may comprise obtaining a first angle of arrival (AoA) for a first dimension of a plurality of antennas and a second AoA for a second dimension of the plurality of antennas and identifying at least one first candidate AoA associated with the first AoA based on a first spacing between antennas in the first dimension. The method may comprise, for each of the at least one first candidate AoA, determining a correction angle for the second AoA in accordance with the first AoA and the first candidate AoA, and identifying at least one second candidate AoA associated with the second AoA based on the correction angle and a second spacing between antennas in the second dimension. The method may comprise transmitting, to a location management server, a measurement message including the first AoA, the at least one first candidate AoA, the second AoA, and the at least one second candidate AoA.

In embodiments, a non-transitory computer readable storage medium is provided. The non-transitory computer readable storage medium may store instructions that, when executed by a processor of a digital unit (DU), cause the DU to perform operations comprising obtaining a first angle of arrival (AoA) for a first dimension of a plurality of antennas and a second AoA for a second dimension of the plurality of antennas and identifying at least one first candidate AoA associated with the first AoA based on a first spacing between antennas in the first dimension, for each of the at least one first candidate AoA, determining a correction angle for the second AoA in accordance with the first AoA and the first candidate AoA, and identifying at least one second candidate AoA associated with the second AoA based on the correction angle and a second spacing between antennas in the second dimension, and transmitting, to a location management server, a measurement message including the first AoA, the at least one first candidate AoA, the second AoA, and the at least one second candidate AoA.

### [Description of the Drawings]

FIG. 1 illustrates a wireless communication system.
FIG. 2 illustrates an example of a base station.
FIG. 3A illustrates an example of transmission of measurement information.
FIG. 3B illustrates another example of transmission of measurement information.
FIG. 4A illustrates an example of measurement of an angle of arrival (AoA) using a plurality of antennas.
FIG. 4B illustrates an example of a two-dimensional (2D) antenna array.
FIG. 4C illustrates an example of a three-dimensional coordinate system.
FIG. 4D illustrates an example of a steering vector in a three-dimensional coordinate system.
FIG. 5 illustrates an example of a procedure of transmission of measurement information.
FIG. 6 illustrates an example of a procedure for configuring an AoA set based on a spacing between antennas.
FIG. 7 illustrates an example of a dimension compensation for determining an AoA set.
FIG. 8 illustrates an operation flow of an electronic device for determining an AoA set using a dimension compensation.
FIG. 9 illustrates a correlation between steering vectors according to a first AoA and a second AoA.
FIG. 10A illustrates an example of components of a digital unit (DU).
FIG. 10B illustrates an example of components of a radio unit (RU).

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a resource (e.g., symbol, slot, subframe, radio frame, subcarrier, resource element (RE), resource block (RB), bandwidth part (BWP), occasion), a term for an operation state (e.g., step, operation, procedure), a term referring to data (e.g., packet, user stream, information, bit, symbol, codeword), a term referring to a radiator of an electronic device (e.g., antenna, antenna element, antenna port), a term referring to a network entity (e.g., radio unit (RU), distributed unit (DU), digital unit (DU), central unit (CU)), and a term referring to a component of a device, that are used in the following description, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in some communication standards (e.g., 3rd Generation Partnership Project (3GPP), European Telecommunications Standards Institute (ETSI), an extensible radio access network (xRAN), an open-radio access network (O-RAN)), but this is only an example for description. Various embodiments of the present disclosure may be easily modified and applied in another communication system.

In the present disclosure, a measurement signal may mean a signal measured by a terminal in order to obtain signal quality to be used for mobility, admission control, or radio resource management (RRM). For example, the measurement signal may be at least one of a synchronization signal (SS) (e.g., an SS block), a beam reference signal (BRS), a beam refinement reference signal (BRRS), a cell-specific reference signal (CRS), a channel state information-reference signal (CSI-RS), and a demodulation-reference signal (DM-RS). According to embodiments, a base station may not only transmit one type of the measurement signal, but also may transmit each of two or more types of measurement signals.

In the present disclosure, the signal quality may be, for example, at least one of reference signal received power (RSRP), beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), error vector magnitude (EVM), a bit error rate (BER), and a block error rate (BLER). In addition to the above-described example, other terms having an equivalent technical meaning or other metrics indicating channel quality may of course be used. Hereinafter, in the present disclosure, that the signal quality is high may mean a case that a signal quality value related to signal magnitude is large or a signal quality value related to an error rate is small. As the signal quality is higher, it may mean that a smooth wireless communication environment is guaranteed. In addition, an optimal beam may mean a beam having the highest signal quality among beams.

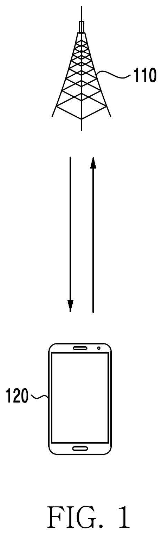

FIG. 1 illustrates a wireless communication system.

Referring to FIG. 1, FIG. 1 illustrates a base station 110 and a terminal 120 as a portion of nodes using a wireless channel in the wireless communication system. FIG. 1 illustrates only one base station, but the wireless communication system may further include another base station identical or similar to the base station 110.

The base station 110 is a network infrastructure that provides wireless access to the terminal 120. The base station 110 has coverage defined based on a distance at which a signal may be transmitted. In addition to the base station, the base station 110 may be referred to as an access point (AP), a radio access network (RAN) node, a new generation (NG)-RAN node, an eNodeB (eNB), a 5th generation (5G) node, a next generation nodeB (gNB), a wireless point, a transmission/reception point (TRP), or another term having an equivalent technical meaning.

The terminal 120 is a device used by a user and performs communication with the base station 110 through the wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through the wireless channel. In this case, a device-to-device link (D2D) between the terminal 120 and the another terminal is referred to as a sidelink, and the sidelink may be interchangeably used with a PC5 interface. In some other embodiments, the terminal 120 may be operated without involvement of the user. According to an embodiment, the terminal 120, which is a device performing machine type communication (MTC), may not be carried by the user. In addition, according to an embodiment, the terminal 120 may be MTC UE or a narrowband (NB)-internet of things (IoT) device.

In addition to the terminal, the terminal 120 may be referred to as user equipment (UE), customer premises equipment (CPE), a mobile station, a subscriber station, a remote terminal, a wireless terminal, an electronic device, a user device, or another term having an equivalent technical meaning.

The base station 110 may perform beamforming with the terminal 120. The base station 110 and the terminal 120 may transmit and receive a radio signal in a relatively low frequency band (e.g., a frequency range 1 (FR 1) of NR). In addition, the base station 110 and the terminal 120 may transmit and receive a radio signal in a relatively high frequency band (e.g., FR 2 (or FR 2-1, FR 2-2, FR 2-3), or FR 3 of the NR, or a millimeter wave (mmWave) band (e.g., 28 GHz, 30 GHz, 38 GHz, or 60 GHz)). For improving of a channel gain, the base station 110 and the terminal 120 may perform the beamforming. Herein, the beamforming may include transmit beamforming and receive beamforming. The base station 110 and the terminal 120 may provide directivity to a transmit signal or a receive signal. To this end, the base station 110 and the terminal 120 may select serving beams through a beam search or a beam management procedure. After the serving beams are selected, subsequent communication may be performed through a resource having a quasi co-location (QCL) relationship with a resource through which the serving beams are transmitted.

If large-scale characteristics of a channel that has transmitted a symbol on a first antenna port may be inferred from a channel that has transmitted a symbol on a second antenna port, the first antenna port and the second antenna port may be evaluated as being in the QCL relationship. For example, the large-scale characteristics may include at least one of a delay spread, a Doppler spread, a Doppler shift, an average gain, an average delay, and a spatial receiver parameter.

Although both the base station 110 and the terminal 120 are described as performing the beamforming in FIG. 1, embodiments of the present disclosure are not necessarily limited thereto. In some embodiments, the terminal may perform the beamforming or may not perform the beamforming. In addition, the base station may perform the beamforming or may not perform the beamforming. That is, only one of the base station and the terminal may perform the beamforming, or both the base station and the terminal may not perform the beamforming.

In the present disclosure, a beam refers to a spatial flow of a signal in a wireless channel, and is formed by one or more antennas (or antenna elements), and such a forming process may be referred to as beamforming. The beamforming may include at least one of analog beamforming or digital beamforming (e.g., precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an IE such as a CSI-RS resource or an SRS-resource may be used, and this configuration may include information associated with the beam. The information associated with the beam may mean whether a corresponding configuration (e.g., the CSI-RS resource) uses the same spatial domain filter as another configuration (e.g., another CSI-RS resource in the same CSI-RS resource set) or uses another spatial domain filter, or which reference signal is quasi-co-located (QCL) with, and if it is QCL, which type (e.g., QCL type A, B, C, or D) it is.

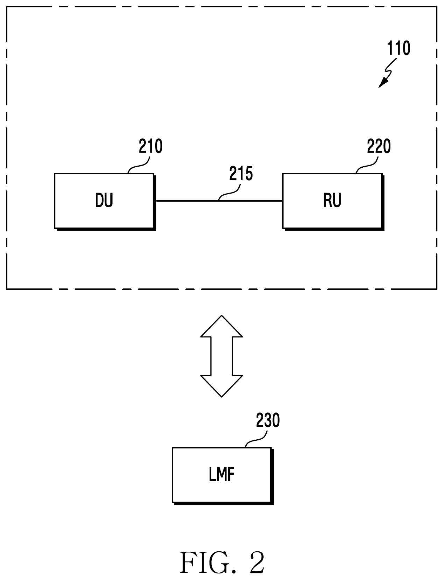

FIG. 2 illustrates an example of a base station. In FIG. 2, a digital unit (DU) (or a distributed unit (DU)) and a radio unit (RU) in which functions of a base station 110 are divided and implemented by different entities are described. For communication between the DU and the RU, a fronthaul interface may be used. The fronthaul refers to entities between a wireless LAN and the base station, unlike a backhaul between the base station 110 and a core network. In FIG. 2, an example of a fronthaul structure between the DU and an RU 220 is illustrated, but this is merely for convenience of description and embodiments of the present disclosure are not limited thereto. In other words, embodiments of the present disclosure may also be applied to a fronthaul structure between one DU and a plurality of RUs. For example, an embodiment of the present disclosure may be applied to a fronthaul structure between one DU and two RUs. For example, an embodiment of the present disclosure may also be applied to a fronthaul structure between one DU and three or more RUs.

Referring to FIG. 2, the base station 110 may include a DU 210 and the RU 220. A fronthaul 215 between the DU 210 and the RU 220 may be operated through an Fₓ interface. For operation of the fronthaul 215, for example, an enhanced common public radio interface (eCPRI) or a radio over ethernet (ROE) may be used. According to an implementation example, in addition to the digital unit (DU), the DU 210 may be referred to as a baseband unit (BBU), a digital BBU, a baseband digital unit, a processing unit, digital processing circuitry, baseband processing circuitry, a baseband processing unit, and/or another term having an equivalent technical meaning. According to an implementation example, in addition to the radio unit (RU), the RU 220 may be referred to as a remote unit, a radio remote head (RRH), radio processing circuitry, a radio processing unit, an antenna integrated radio, an air radio device, an air scale communication device, a radio device, and/or another term having an equivalent technical meaning.

As communication technology develops, mobile data traffic increases, and accordingly, a bandwidth requirement required in a fronthaul between a digital unit and a radio unit has significantly increased. In a deployment such as a centralized/cloud radio access network (C-RAN), the DU 210 may perform functions for a packet data convergence protocol (PDCP) (which may be omitted according to an implementation), a radio link control (RLC), a media access control (MAC), and a physical (PHY), and the RU 220 may be implemented to further perform functions for a PHY layer in addition to a radio frequency (RF) function. The DU 210 may perform functions of an upper layer of a radio network. For example, the DU 210 may perform functions of the MAC layer and a portion of the PHY layer. Herein, the portion of the PHY layer refers to functions performed at a higher stage among functions of the PHY layer, and may include, as an example, channel encoding (or channel decoding), scrambling (or descrambling), modulation (or demodulation), and layer mapping (or layer demapping). According to an embodiment, in a case that the DU 210 conforms to an O-RAN standard, it may be referred to as an O-DU (O-RAN DU). The DU 210 may be replaced with and represented as a first network entity for the base station (e.g., gNB) in embodiments of the present disclosure as necessary. The RU 220 may perform functions of a lower layer of the radio network. For example, the RU 220 may perform a portion of the PHY layer and an RF function. Herein, the portion of the PHY layer refers to functions performed at a relatively lower stage than the DU 210 among the functions of the PHY layer, and may include, as an example, an iFFT transform (or an FFT transform), CP insertion (CP removal), and digital beamforming. The RU 220 may be referred to as an access unit (AU), an access point (AP), a transmission/reception point (TRP), a remote radio head (RRH), a radio unit (RU), or another term having an equivalent technical meaning. According to an embodiment, in a case that the RU 220 conforms to the O-RAN standard, it may be referred to as an O-RU (O-RAN RU). The RU 220 may be replaced with and represented as a second network entity for the base station (e.g., gNB) in embodiments of the present disclosure as necessary.

In FIG. 2, although the base station 110 is described as including the DU 210 and the RU 220, embodiments of the present disclosure are not limited thereto. The base station according to embodiments may be implemented as a distributed deployment according to a centralized unit (CU) configured to perform functions of upper layers (e.g., a packet data convergence protocol (PDCP), or a radio resource control (RRC)) of an access network and a distributed unit (DU) configured to perform functions of lower layers. As an example, the DU 210 may be implemented by being separated into the CU and the DU. Between a core network (e.g., a 5GC or an NGC) and a radio network (RAN), the base station may be implemented in a structure in which the CU, the DU, and the RU are disposed in order. An interface between the CU and the DU (distributed unit) may be referred to as an F1 interface.

The centralized unit (CU) may perform functions of upper layers than the DU by being connected to one or more DUs. For example, the CU may perform functions of the radio resource control (RRC) layer and the packet data convergence protocol (PDCP) layer, and the DU and the RU may perform functions of lower layers. The DU may perform partial functions (high PHY) of the radio link control (RLC), the media access control (MAC), and the physical (PHY) layer, and the RU may perform remaining functions (low PHY) of the PHY layer. In addition, as an example, the digital unit (DU) may be included in the distributed unit (DU) according to the distributed deployment implementation of the base station. Hereinafter, unless otherwise defined, it is described as operations of the digital unit (DU) and the RU, but various embodiments of the present disclosure may be applied to both a base station deployment including the CU or a deployment in which the DU is directly connected to a core network (i.e., a base station (e.g., an NG-RAN node) in which the CU and the DU are implemented as one entity).

The base station 110 (or the DU 210) may perform communication with a location management server 230. The location management server 230 may be a network entity in charge of a location management function (LMF). Hereinafter, an operation of the LMF may be understood as an operation of the network entity (e.g., the location management server 230) in which the LMF is implemented. For example, the location management server 230 may receive measurement information and support information from the base station 110 and the terminal 120 through an access and mobility management function (AMF), and may calculate a location of the terminal 120 based on the received information. In addition, for example, between the base station 110 and the location management server 230, NRPPa, which is a new location check protocol, may be defined to transmit location information or measurement information. The protocol may provide a framework for positioning in 5G. In addition, based on an LTE Positioning Protocol (LPP), a framework for positioning between the terminal 120 and the location management server 230 may be provided. The location management server 230 may support various location services for the terminal 120. The location management server 230 may obtain a result of location measurement of the terminal 120 based on uplink measurements and downlink measurements. In order to obtain a location of the terminal 120, the location management server 230 may determine a positioning method. The location management server 230 may support the base station 110 based on the positioning method.

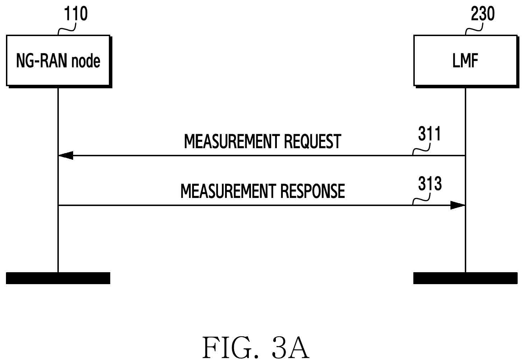

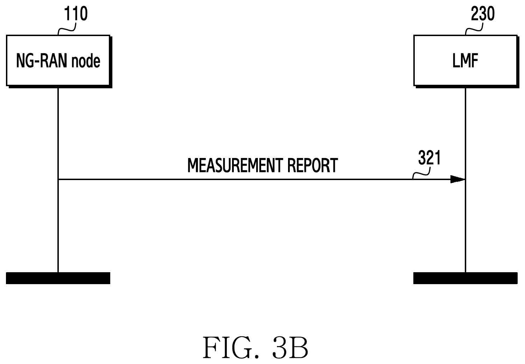

Hereinafter, the present disclosure relates to a device and a method for obtaining the location of the terminal 120 based on radio signals in a wireless communication system (e.g., an LTE communication system, or an NR communication system). Specifically, the present disclosure describes a technique for determining an angle of arrival (AoA) (or a direction of arrival) of signals based on reference signals (e.g., a demodulation-reference signal (DM-RS), a sounding reference signal (SRS), a synchronization signal/physical broadcast channel (PBCH) block (SSB), a channel state information-reference signal (CSI-RS)) and antennas used in the wireless communication system. The AoA may be used to obtain location information of the terminal 120. In order to determine the location of the terminal 120, multiple AoAs may be provided to the location management server 230. Hereinafter, in FIG. 3A and FIG. 3B, examples of signaling for transmitting the multiple AoAs to the location management server 230 are described.

FIG. 3A illustrates an example of transmission of measurement information. The transmission of the measurement information may be performed by an NG-RAN node (e.g., the base station 110, or the DU 210) and an LMF (e.g., the location management server 230). Operations of an electronic device (e.g., the base station 110, or the DU 210) in FIG. 3A are exemplary and are not to be interpreted as limiting operations of the electronic device (e.g., the base station 110, or the DU 210) according to embodiments of the present disclosure. For example, not all of information to be described later in FIG. 3A is necessarily transmitted to a corresponding LMF, and at least a portion of the information to be described later may be transmitted through a message.

Referring to FIG. 3A, in operation 311, the LMF 230 may transmit a measurement request message to an NG-RAN node 110. The NG-RAN node 110 may receive the measurement request message from the LMF 230. In a measurement procedure, the LMF 230 may request one or more TRPs in the NG-RAN node 110 to perform and report positioning measurement. The LMF 230 may provide, through the measurement request message, information on the one or more TRPs for which measurement is required.

The measurement request message may include a message type, a transaction ID, an LMF measurement ID, and measurement request information to configure the positioning measurement. The measurement request information may include information (e.g., a TRP ID) on a TRP corresponding to a measurement target. According to an embodiment, the measurement request message may include information on a measurement quantity. The measurement quantity may indicate a type of a measurement parameter. For example, the type of the measurement parameter may indicate a receive-transmit time difference (RxTxTimeDiff), SRS RSRP, SRS reference signal received path power (RSRPP), a relative time arrival (RTOA), an uplink AoA, or multiple UL AoAs.

In operation 313, the NG-RAN node 110 may transmit a measurement response message to the LMF 230. The NG-RAN node 110 may transmit the measurement response message as a response to the measurement request message. For example, in a case that report characteristic information in the measurement request message is set to 'on-demand', the NG-RAN node 110 may transmit the measurement response message including a measurement result to the LMF 230, and may terminate a procedure. For another example, in a case that the report characteristic information in the measurement request message is set to 'periodic', the NG-RAN node 110 may periodically transmit the measurement response message including the measurement result to the LMF 230 according to a report period.

The measurement response message may include a message type, a transaction ID, an LMF measurement ID, and a RAN measurement ID to report a measurement result of a terminal (e.g., the terminal 120) that is a target of positioning. The measurement response message may include a measurement result. For example, the measurement response message may include measurement results per TRP of one or more TRPs. The one or more TRPs may be indicated by the measurement request message of the operation 311. The measurement response message may include a TRP ID and a measurement result for a TRP of the TRP ID. In addition, for example, the measurement response message may further include a cell ID. The cell ID may indicate a cell provided by the TRP of the TRP ID. As an example, the measurement response message may be transmitted in a following format.

**[Table 1]**

| IE/Group Name | Presence | Range | IE type and reference | Semantics description | Criticality | Assigned Criticality |
|---|---|---|---|---|---|---|
| Message Type | M | | 9.2.3 | | YES | reject |
| NRPPa Transaction ID | M | | 9.2.4 | | - | |
| LMF Measurement ID | M | | INTEGER (1..65536, ...) | | YES | reject |
| RAN Measurement ID | M | | INTEGER (1..65536, .....) | | YES | reject |
| TRP Measurem | | 0..1 | | | YES | reject |
| ent Response List | | | | | | |
| > TRP Measurement Response Item | | 1..<maxnoofMeasTRPs > | | | EACH | reject |
| >>TRP ID | M | | 9.2.24 | | - | |
| >>TRP Measurement Result | M | | 9.2.37 | | - | |
| >>Cell ID | O | | NR CGI9.2.9 | The Cell ID of the TRP identified by the TRP ID IE. | YES | ignore |
| Criticality Diagnostics | O | | 9.2.2 | | YES | ignore |

'Message Type' indicates the message type (e.g., an initiating message, a successful outcome, or an unsuccessful outcome). 'NRPPa Transaction ID' indicates an identifier corresponding to the transaction ID and used to identify a procedure of message(s). 'LMF Measurement ID' indicates an identifier corresponding to the LMF measurement ID and used to identify a measurement procedure of the LMF. 'RAN Measurement ID' indicates an identifier corresponding to the RAN measurement ID and used to identify a measurement procedure in a radio access network. 'TRP Measurement Result' indicates a measurement result per TRP corresponding to the TRP ID. According to an embodiment, the measurement result may include a value according to the type of the measurement parameter. For example, the measurement result may include UL SRS-RSRP, UL RTOA, a receive-transmit time difference (e.g., a gNB Rx-TX Time difference), a zenith AoA (Z-AoA), an azimuth AoA (A-AoA), multiple UL AoAs, or UL SRS-RSRPP. As an example, the measurement result may be included in the measurement response message in a following format.

**[Table 2]**

| IE/Group Name | Presence | Range | IE Type and Reference | Semantics Description | Criticality | Assigned Criticality |
|---|---|---|---|---|---|---|
| Measured Result Item | | 1 .. <maxnoPosMeas> | | | | |
| >CHOICE Measured Results Value | M | | | | | |
| >>UL Angle of Arrival | M | | 9.2.38 | | - | |
| >>UL SRS-RSRP | M | | INTEGE R (0..126) | | - | |
| >>UL RTOA | M | | 9.2.39 | | - | |
| >>gNB Rx-Tx Time Difference | M | | 9.2.40 | | - | |
| >>Z-AoA | M | | 9.2.67 | | YES | reject |
| >>Multiple UL-AoA | M | | 9.2.71 | | YES | reject |
| >>UL SRS-RSRPP | M | | 9.2.72 | | YES | reject |
| >Time Stamp | M | | 9.2.42 | | - | |
| >Measurement Quality | O | | 9.2.43 | | - | |
| >Measurement Beam Information | O | | 9.2.57 | | - | |
| >SRS Resource type | O | | 9.2.73 | | YES | ignore |
| >ARP ID | O | | 9.2.75 | | YES | ignore |
| >LoS/NLoS Information | O | | 9.2.77 | | YES | ignore |

'M' indicates that a corresponding IE in the message is mandatory, and 'O' indicates that a corresponding IE in the message is optional. 'Measured Result Item' indicates a value according to a type of the measurement result, and 'Time Stamp' indicates a time value. 'Measurement Quality' indicates a best estimate when measuring. 'Measurement Beam Information' indicates reception beam information when measuring through UL signals. 'SRS Resource type' indicates a type of SRS signals among the UL signals, and may include an SIS resource ID. 'ARP ID' indicates an identifier for identifying an antenna reference point (ARP) related to the TRP. 'LoS/NLoS Information' indicates whether it is a line-of-sight (LOS) or a non-line of sight (NLOS) in UL measurement, and may be represented as a soft value (represented as 0 to 10, and '0' is the NLOS and '1' is the LOS).

FIG. 3B illustrates another example of transmission of measurement information. The transmission of the measurement information may be performed by an NG-RAN node (e.g., the base station 110). Operations of an electronic device (e.g., the base station 110, or the DU 210) in FIG. 3B are exemplary and are not to be interpreted as limiting the operations of the electronic device (e.g., the base station 110, or the DU 210) according to embodiments of the present disclosure. For example, not all of information to be described later in FIG. 3B is necessarily transmitted to a corresponding LMF, and at least a portion of the information to be described later may be transmitted through a message.

Referring to FIG. 3B, in operation 321, the NG-RAN node 110 may transmit a measurement report message to an LMF (e.g., the location management server 230). A measurement reporting procedure causes the NG-RAN node 110 to report positioning measurements to the LMF 230. The NG-RAN node 110 may initiate the procedure by transmitting the measurement report message to the LMF 230. The measurement report message may include a measurement result according to a related measurement configuration.

The measurement report message may include a message type (e.g., the 'Message Type' IE of the [Table 1]), a transaction ID (e.g., the 'NRPPa Transaction ID' IE of the [Table 1]), an LMF measurement ID (e.g., the 'LMF Measurement ID' IE of the [Table 1]), and a RAN measurement ID (e.g., the 'RAN Measurement ID' IE of the [Table 1]) to report a measurement result of a terminal (e.g., the terminal 120) that is a target of positioning. The measurement report message may include a measurement result. For example, the measurement report message may include measurement results per TRP of one or more TRPs. The one or more TRPs may be indicated by the measurement request message of the operation 311. The measurement report message may include a TRP ID and a measurement result for a TRP of the TRP ID. In addition, for example, the measurement report message may further include a cell ID. The cell ID may indicate a cell provided by the TRP of the TRP ID. As an example, the measurement report message may be transmitted in a following format.

**[Table 3]**

| IE/Group Name | Presence | Range | IE type and reference | Semantics description | Criticality | Assigned Criticality |
|---|---|---|---|---|---|---|
| Message Type | M | | 9.2.3 | | YES | reject |
| NRPPa Transaction ID | M | | 9.2.4 | | - | |
| LMF Measurement ID | M | | INTEGER (1..65536, ..) | | YES | reject |
| RAN Measurement ID | M | | INTEGER (1..65536, ..) | | YES | reject |
| TRP Measurement Response List | | 1 | | | YES | reject |
| >TRP Measurement Response Item | | 1..<maxnoofMeasTRPs > | | | EACH | reject |
| >>TRP ID | M | | 9.2.24 | | - | |
| >>TRP Measurement Result | M | | 9.2.37 | | - | |
| >>Cell ID | O | | NR CGI9.2.9 | The Cell ID of the TRP identified by the TRP ID IE. | YES | ignore |

For a description of each IE, the description of the IEs of the [Table 1] may be referred to. According to an embodiment, the measurement result (e.g., the 'TRP Measurement Result' IE of the [Table 3]) may include a value according to a type of a measurement parameter. For example, the measurement result may include UL SRS-RSRP, UL RTOA, a receive-transmit time difference (e.g., gNB Rx-TX Time difference), a zenith (Z)-AoA, an azimuth (A)-AoA, multiple UL AoAs, or UL SRS-RSRPP. As an example, the measurement result may be included in the measurement report message in the format of the [Table 2]. In the [Table 2], for a format for the multiple UL AoAs, a following table may be referred to.

**[Table 4]**

| IE/Group Name | Presence | Range | IE Type and Reference | Semantics Description |
|---|---|---|---|---|
| UL AoA List | | 1 | | |
| >UL AoA item | | 1..<maxnoofULAoAs > | | |
| >>CHOICE AngleMeasurement | M | | | |
| >>>UL Angle of Arrival | | | | |
| >>>>UL Angle of Arrival | M | | 9.2.38 | |
| >>>UL Zenith Angle of Arrival | | | | |
| >>>>UL Zenith Angle of Arrival | M | | Z-AoA9.2.67 | |

'M' indicates that a corresponding IE in the message is mandatory, and 'O' indicates that the corresponding IE in the message is optional. The 'UL Angle of Arrival' IE may include information on an angle for a first dimension (e.g., a vertical dimension) (e.g., a zenith angle) and an angle for a second dimension (e.g., a horizontal dimension) (e.g., an azimuth angle). For example, for a format of the 'UL Angle of Arrival' IE, a following table may be referred to.

**[Table 5]**

| IE/Group Name | Presence | Range | IE Type and Reference | Semantics Description |
|---|---|---|---|---|
| Azimuth Angle of Arrival | M | | INTEGER(0..3599) | TS 38.133 [16] |
| Zenith Angle of Arrival | O | | INTEGER(0..1799) | TS 38.133 [16] |
| LCS to GCS Translation | O | | 9.2.69 | If absent, the azimuth and zenith are provided in GCS. |

'M' indicates that a corresponding IE in the message is mandatory, and 'O' indicates that the corresponding IE in the message is optional.

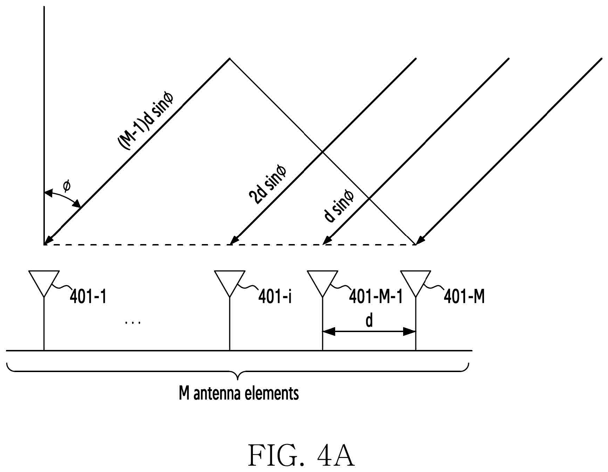

FIG. 4A illustrates an example of measurement of an angle of arrival (AoA) using a plurality of antennas. An electronic device (e.g., the base station 110, the RU 220, or a massive MIMO unit (MMU)) for obtaining the AoA of the present disclosure may include the plurality of antennas. Each antenna of the plurality of antennas may be referred to as an antenna element of an array antenna.

Referring to FIG. 4A, the electronic device may include a plurality of antennas 401-1, ..., 401-i, ..., 401-M-1, and 401-M. For example, the electronic device may include M antennas (M is an integer of 2 or more). A spacing between the antennas may be d.

The electronic device may estimate the AoA. The electronic device may receive signals through the plurality of antennas. The electronic device may receive a signal through each antenna of the plurality of antennas. For example, the electronic device may receive a reference signal through each antenna. The electronic device may obtain a phase at each antenna. The electronic device may calculate magnitude of a phase that varies between the antennas, and may determine the AoA based on the magnitude of the phase.

In a wireless communication system (e.g., an LTE communication system, or an NR communication system) that provides a mobile network, a far field may be defined. In the far field, an electromagnetic signal may be interpreted as a plane wave. Signals received through the plurality of antennas may be represented as illustrated in FIG. 4A. It is assumed that a distance between an M-1-th antenna 401-M-1 and an M-th antenna 401-M is d. For example, based on a direction perpendicular to a plane on which the plurality of antennas 401-1, ..., 401-i, ..., 401-M-1, 401-M are arranged, the signals are incident at an angle of Φ. A physical distance between a signal received through the M-th antenna 401-M and a signal received through the M-1-th antenna 401-M-1 is dsinΦ. A physical distance between the signal received through the M-th antenna 401-M and a signal received through an M-2-th antenna is 2dsinΦ. A physical distance between the signal received through the M-th antenna 401-M and a signal received through a 1st antenna is (M-1)dsinΦ.

Since a physical distance experienced by a signal is different, a phase of a signal received at each antenna may be different according to an angle at which the signal is incident. The electronic device may estimate an AoA based on a phase difference between antennas. A method for estimating the AoA using the phase difference between antennas may use an algorithm based on a correlation operation. The electronic device may configure an angle range to be searched for a terminal that is a target for measuring a location. The electronic device may determine candidate angles based on the set angle range, and may determine a steering vector for each candidate angle. The steering vector indicates a set of phase differences of signals entering each antenna for a single direction signal. For example, a steering vector of a signal incident on each of M antennas may be represented as follows. $s \left(ϕ\right) = \left[1,exp\left(j2π\frac{d cos ϕ}{{λ}_{0}}\right),exp\left(j2π\frac{2 d cos ϕ}{{λ}_{0}}\right),⋯,exp\left(j2π\frac{\left(M-1\right) d cos ϕ}{{λ}_{0}}\right)\right]$

*s*(*ϕ*) indicates steering vectors for signals incident on M antennas at the angle of Φ, and each element of a set indicates a steering vector at a corresponding antenna. As an example, the electronic device may set a search range of a horizontal domain from -90 degrees to 90 degrees. The electronic device may determine 181 steering vectors by setting candidate angles in units of 1 degree. The electronic device may calculate a correlation between a received RS signal and each steering vector. The electronic device may identify a candidate angle associated with a steering vector having the largest magnitude (e.g., a squared L2 norm) of the correlation. The electronic device may determine the identified candidate angle as the AoA.

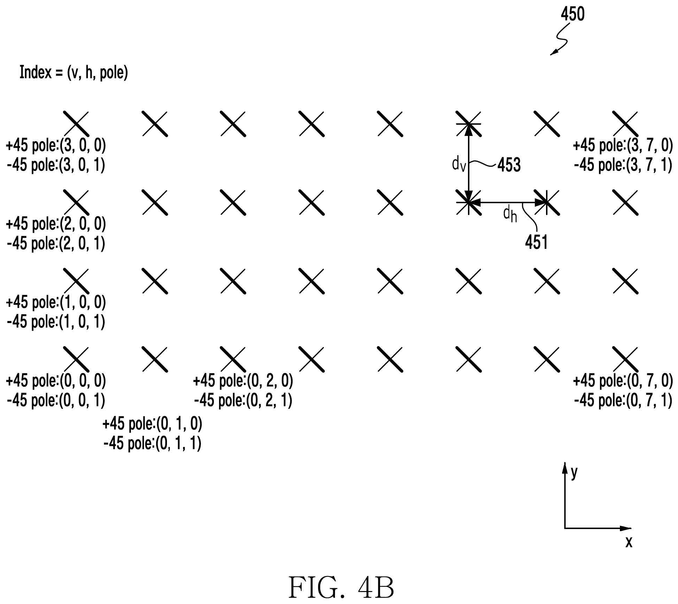

FIG. 4A illustrates a one-dimensional antenna array, that is, a linear array. The electronic device may estimate a horizontal/azimuth angle or a vertical/zenith angle according to an arrangement direction of the linear array including the plurality of antennas 401-1, ..., 401-i, ..., 401-M-1, 401-M. Meanwhile, not only the linear array illustrated in FIG. 4A, but also the AoA may be estimated in a two-dimensional (2D) antenna array. The electronic device including the 2D antenna array may estimate both the azimuth angle and the zenith angle. Hereinafter, in FIG. 4B, descriptions for an example of the 2D antenna array are described.

FIG. 4B illustrates an example of a two-dimensional (2D) antenna array.

Referring to FIG. 4B, the electronic device (e.g., the base station 110, the RU 220, the MMU) may include a 2D antenna array 450. The 2D antenna array 450 may include a plurality of antennas in a two-dimensional plane. For example, an x-axis of the two-dimensional plane may be referred to as a first direction, a first dimension, a first domain, a horizontal dimension, or a horizontal domain. A y-axis of the two-dimensional plane may be referred to as a second direction, a second dimension, a second domain, a vertical dimension, or a vertical domain. Hereinafter, in the two-dimensional plane, two dimensions are composed of the first dimension and the second dimension, and for convenience of description, the first dimension is described as the vertical dimension and the second dimension is described as the horizontal dimension, but embodiments of the present disclosure are not limited thereto. For example, the first dimension may be the horizontal dimension and the second dimension may be the vertical dimension. If being in a perpendicular relationship, the first dimension and the second dimension may be referred to as any names. The 2D antenna array 450 may support a dual polarization. A first polarization and a second polarization of the dual polarization may be substantially perpendicular to each other. For example, each antenna of the 2D antenna array 450 may support a +45 degree polarization or a - 45 degree polarization. In addition, for example, each antenna of the 2D antenna array 450 may support a horizontal polarization or a vertical polarization.

A location of an antenna in the two-dimensional plane of the 2D antenna array 450 may be represented as a horizontal index h and a vertical index v. Two antennas having the same horizontal index and the same vertical index may have different polarizations. For example, the two antennas may be disposed in an X shape. The two antennas may be referred to as cross-polarization (x-pol) antennas. A polarization may indicate a pole. A specific polarization may be represented as an index '0'. A polarization substantially perpendicular to the specific polarization may be referred to as an index '1'. Each antenna of the 2D antenna array 450 may be indicated by an index (v, h, pole). For convenience of description, in a case that the polarization is omitted, the location of the antenna may be represented as (m, n). 'm' indicates an antenna number in the vertical dimension, and 'n' may indicate an antenna number in the horizontal dimension.

The antennas of the 2D antenna array 450 may be spaced apart from each other. When a cross-polarization antenna is assumed, a distance between an intersection point of two antennas of the cross-polarization antenna and an intersection point between other two antennas may indicate a spacing distance between the antennas. A distance between the antennas in the horizontal domain may be referred to as a horizontal distance 451 (d_{H}). For example, a distance between (2, 6, 0) and (2, 5, 0) may be the horizontal distance 451 (d_{H}). A distance between antennas in the vertical domain may be referred to as a vertical distance 453 (d_{V}). For example, a distance between (3, 5, 0) and (2, 5, 0) may be the vertical distance 453 (d_{V}).

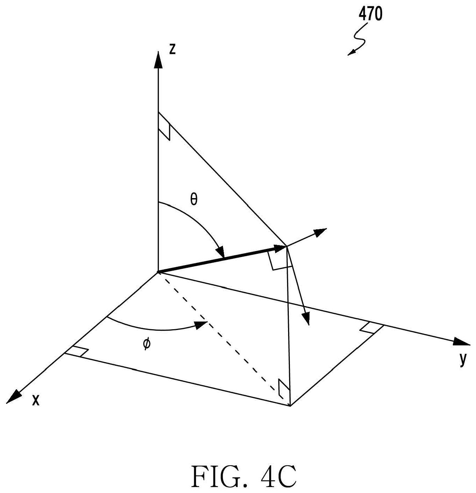

FIG. 4C illustrates an example of a three-dimensional coordinate system.

Referring to FIG. 4C, in a three-dimensional coordinate system 470 (e.g., a spherical coordinate system), a vector 480 may indicate a vector of an incident signal. In the three-dimensional coordinate system 470, the vector 480 has an azimuth angle of *ϕ* in a horizontal domain (e.g., a y-axis), and the azimuth angle may have a range of $- \frac{π}{2} < ϕ < \frac{π}{2}$ with respect to an x-axis. In the three-dimensional coordinate system 470, the vector 480 may have a zenith angle of *θ* in a vertical domain (e.g., a z-axis). The zenith angle may have a range of 0 < *θ* < *π* with respect to a z-axis.

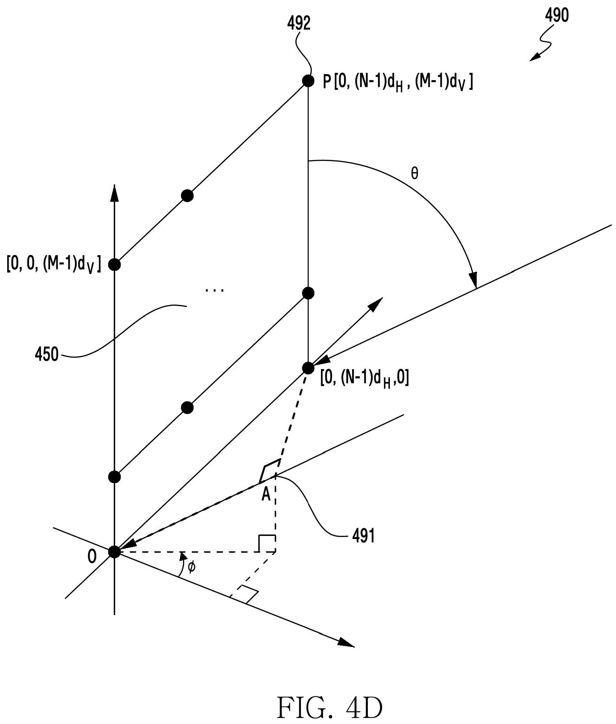

FIG. 4D illustrates an example of a steering vector in a three-dimensional coordinate system.

Referring to FIG. 4D, the 2D antenna array 450 of FIG. 4B may be located on a y-z plane of a three-dimensional coordinate system 490. Through the 2D antenna array 450, the electronic device may estimate an AoA of a horizontal dimension and an AoA of a vertical dimension. For example, in a horizontal domain (e.g., a y-axis), a horizontal candidate AoA may be *ϕ*. As an example, the horizontal candidate AoA may have a range of $- \frac{π}{2} < ϕ < \frac{π}{2}$. For example, in a vertical domain (e.g., a z-axis), a vertical candidate AoA may be *θ*. As an example, the vertical candidate AoA may have a range of 0 < *θ* < *π*. The electronic device may obtain a steering vector *s*(*ϕ*, *θ*) based on the horizontal candidate AoA and the vertical candidate AoA.

For example, when a distance of OA is r, coordinates (x, y, z) of a point A 491 may be (r·sin*θ*cos*ϕ*, r·sin*θ*sin*ϕ*, r·cos*θ*). Coordinates of a point P 492 at which an antenna located at (1, N), that is, first in the vertical domain and last in the horizontal domain, is located may be (0, (N-1) dH, 0). When using a dot product between a vector PA and a vector OA is 0, the distance r of OA may be (*N* - 1)*d_{H}*sin*θ*sin*ϕ*. Coordinates of a point Q 493 at which an antenna located at a farthest distance based on an origin O is located may be (0, (N-1) d_{H}, (M-1) d_{V}). By using a dot product of the same vector, a distance from a steering vector of an antenna located at (1, 1) to the point Q 493 correspond to ' (*N* - 1)*d_{H}* sin *θ* sin *ϕ* + (*M -* 1) *d_{V}*cos*θ*. For example, a steering vector of an antenna corresponding to an index of (m, n) may be represented by a following equation.${s}_{m , n} \left(ϕ, θ\right) = exp \left(j\frac{2 π}{{λ}_{0}}\left({nd}_{H} sin θ sin ϕ+{md}_{V} cos {θ}_{n}\right)\right)$

n indicates an antenna index in the horizontal dimension (e.g., the y-axis) (when the number of antennas arranged in the horizontal dimension is N, 0 ≤ *n* ≤ *N* - 1), and m indicates an antenna index in the vertical dimension (e.g., the z-axis) (when a number of antennas arranged in the vertical dimension is M, 0 ≤ *m* ≤ *M* - 1). d_{V} indicates a spacing between antennas in the vertical dimension (hereinafter, a vertical spacing or a first spacing). d_{H} indicates a spacing between antennas in the horizontal dimension (hereinafter, a horizontal spacing or a second spacing). Since the steering vector may be applied without distinction to pole 0 and 1 of the 2D antenna array 450, a pole index may be omitted. The [Equation 2] may be simplified as a following equation.${s}_{m , n} \left(ϕ, θ\right) = exp \left(j2πbn sinθ sinϕ+j2πam cosθ\right)$

In $a = \frac{{d}_{V}}{{λ}_{0}} , b = \frac{{d}_{H}}{{λ}_{0}}$, 'a' indicates a spacing between antennas normalized by a wavelength in a first dimension (e.g., the vertical dimension), and 'b' indicates a spacing between antennas normalized by a wavelength in a second dimension (e.g., the horizontal dimension).

A result of de-correlation between a signal received at the (m, n)-th antenna and an RS sequence may be *y_{n,m}*. A correlation between a steering vector and a received RS signal (*y_{n,m}*) may be calculated for all candidate angles *ϕ* and *θ*.$CORR \left(ϕ, θ\right) = {\sum }_{m = 0}^{M - 1} {\sum }_{n = 0}^{N - 1} {s}_{n , n}^{∗} \left(ϕ, θ\right) {y}_{n , m}$

*CORR*(*ϕ*, *θ*) indicates the correlation. N indicates the number of antennas (e.g., 8) arranged in the horizontal dimension in the 2D antenna array 450, and M indicates the number of antennas (e.g., 4) arranged in the vertical dimension in the 2D antenna array 450. ${s}_{n , m}^{∗}$ is a conjugate complex number of *s_{n,m}*. A correlation calculation is a complex number multiplication operation, and a correlation result is also a complex number. The electronic device may identify {*ϕ_{H}, θ_{V}*} for which a value of a squared L2 norm of the complex correlation result is maximum.$\left\{{ϕ}_{H}, {θ}_{V}\right\} = {argmax}_{- \frac{π}{2} < ϕ < \frac{π}{2} , 0 < θ < π} \left\{{\left‖CORR\left(ϕ, θ\right)\right‖}^{2}\right\}$

*ϕ_{H}* indicates an estimated horizontal AoA, and *θ_{V}* indicates an estimated vertical AoA. According to an embodiment, the estimated horizontal AoA and the estimated vertical AoA may be reported to a location management server 230.

In a method estimated through the [Equation 1] to the [Equation 5], a range of an AoA that is estimable without angle ambiguity may be determined by a spacing between antennas. When the spacing between the antennas is greater than 0.5*λ*₀ (*λ*₀ : a wavelength of a signal), the angle ambiguity may occur. For example, referring to the steering vector of the [Equation 1], a phase difference between two adjacent antennas is $Δθ = \frac{2 π}{{λ}_{0}} {d}_{V} cos θ$. When Δθ is the same at two or more candidate angles, values of steering vectors of the candidate angles may all be identical. Therefore, the electronic device or the location management server 230 may not distinguish the candidate angles described above through a correlation measurement with the received signal. In other words, the angle ambiguity occurs when a phase difference Δθ*ₙ* for a plurality of candidate angles differs by an integer multiple of 2π. For example, an equation for a condition in which the angle ambiguity occurs may be represented as follows. $\frac{2 π}{{λ}_{0}} {d}_{V} cos {θ}_{n} = \frac{2 π}{{λ}_{0}} {d}_{V} cos {θ}_{x} + 2 kπ \left(k{:}^{Inte - ger}\right)$

When the condition in which the angle ambiguity occurs is associated with the steering vector, an equation as follows may be referred to.$\begin{matrix}{s}_{n , m} \left({ϕ}_{y}, {θ}_{x}\right) = exp \left(j2πbn {sinθ}_{x} {sinϕ}_{y}+j2πam {cosθ}_{x}\right) \\ = exp \left(j2πbn {sinθ}_{V} {sinϕ}_{H}+j2πam {cosθ}_{V}+j2πp\right)\end{matrix}$

When an integer p satisfying the [Equation 7] exists, it indicates that a steering vector at (*ϕ_{y}*, *θₓ*) and a steering vector at (*ϕ_{H}*, *θ_{V}*) are identical. Therefore, a problem in which it is difficult to distinguish the two steering vectors may occur.

In an array antenna provided in the electronic device, when a spacing between antennas is greater than 0.5*λ*₀, angle ambiguity inevitably occurs. Since it is not known whether the estimated AoA is an incident angle of an actual terminal or a mirror angle due to the ambiguity, the electronic device or the location management server 230 may have difficulty in estimating an accurate location of a terminal (e.g., the terminal 120).

In order to resolve the above-described problem, the electronic device according to embodiments (e.g., the base station 110, the DU 210, hereinafter described based on the base station 110), instead of simply reporting the estimated AoA to the location management server 230, may report multiple AoAs (e.g., the 'multiple UL-AoA' IE of the Table 2) to the location management server 230 (e.g., the LMF). The plurality of AoAs may include the estimated AoA and a mirror AoA considering the angle ambiguity. For example, in a first example, an angle between two signals may be a₁, and in a second example, an angle between two signals may be a₂. However, a phase difference between the two signals in the first example may be identical to a phase difference between the two signals in the second example. Due to a periodic characteristic of a sinusoidal wave, cases having the same phase difference but having different angles may occur. As such, an AoA value that has a value different from the estimated AoA but has the same phase difference characteristic may be referred to as the mirror AoA.

The base station 110 may transmit a plurality of AoA values (e.g., AoA set = {*θ*₀, *θ*₁, ... , *θ*₇}) to the location management server 230 by including at least one mirror AoA determined based on an angle ambiguity. Since the plurality of AoA values including the mirror AoA are provided to the location management server 230, the location management server 230 may estimate the location of the terminal (e.g., the terminal 120) more accurately based on the plurality of AoA values. In order to improve positioning performance of the location management server 230, the base station 110 is required to estimate all mirror AoAs according to the angle ambiguity and to report the estimated AoA and the mirror AoAs to the location management server 230.

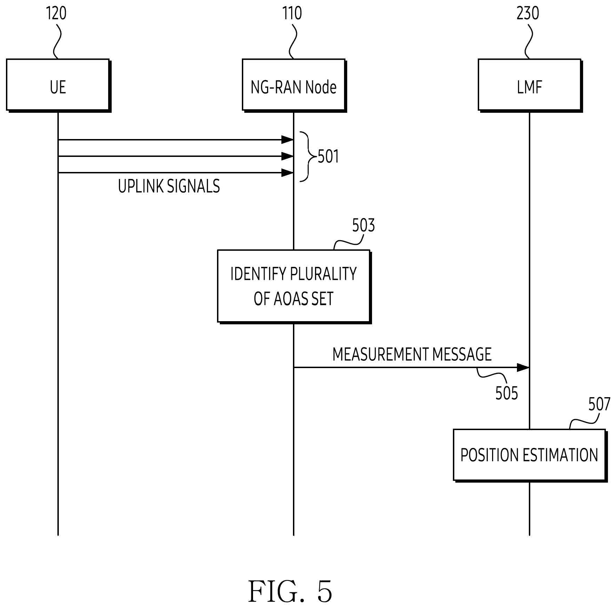

FIG. 5 illustrates an example of a procedure of transmission of measurement information.

Referring to FIG. 5, in operation 501, a terminal 120 may transmit uplink signals to a base station 110. The base station 110 may include the NG-RAN node of FIG. 3A to FIG. 3B. For example, the uplink signals may include SRSs. For example, the SRSs may be SRSs for uplink channel estimation, or positioning SRSs specified for position estimation. The base station 110 may receive the uplink signals from the terminal 120. The base station 110 may receive the uplink signals through a plurality of antennas. The base station 110 may receive the uplink signal through each antenna of the plurality of antennas.

In operation 503, the base station 110 may identify an AoA set. The AoA set may include a plurality of AoAs. The base station 110 may determine a phase of an uplink signal obtained through each antenna of the plurality of antennas. The base station 110 may determine an AoA (hereinafter, a reference AoA) based on a phase difference between antennas. The base station 110 may determine at least one mirror AoA associated with the reference AoA. The base station 110 may determine the AoA set including the reference AoA and the at least one mirror AoA.

In operation 505, the base station 110 may transmit a measurement message to a location management server 230. The location management server 230 may include the LMF 230 of FIG. 3A to FIG. 3B. For example, the measurement message may include a location measurement response message corresponding to the location measurement request message of FIG. 3A. Also, for example, the measurement message may include the location measurement report message of FIG. 3B. According to an embodiment, the measurement message may include an AoA set. For example, the measurement message may include a value according to a type of a measurement parameter. The type of the measurement parameter may indicate multiple UL-AoAs. The measurement message may include a plurality AoAs of the AoA set.

In operation 507, the location management server 230 may perform position estimation of the terminal 120. The location management server 230 may perform the position estimation of the terminal 120 based on the measurement message. The location management server 230 may perform the position estimation of the terminal 120 based on the plurality of AoAs.

In FIG. 5, although described as operations of the base station 110, embodiments of the present disclosure are not limited thereto. In a distributed deployment scenario, operations of the base station 110 may be divided into operations of a DU 210 and operations of an RU 220. For example, uplink signals of the terminal 120 may be received by the RU 220. The uplink signals may be transmitted from the RU 220 to the DU 210. For example, the RU 220 may provide the DU 210 with the uplink signals through a U-plane message on a fronthaul interface. The DU 210 may determine AoAs of signals incident at antennas of the RU 220 based on phase variations of the uplink signals. The DU 210 may transmit the determined AoAs to the location management server 230. Also, as another example, the uplink signals of the terminal 120 may be received by the RU 220. The RU 220 may obtain phase variations of the uplink signals. The RU 220 may transmit information on the phase variations to the DU 210. The DU 210 may determine AoAs of signals incident at the antennas of the RU 220 based on the phase variations. The DU 210 may transmit the determined AoAs to the location management server 230.

In order to report the plurality of AoAs (e.g., up to 8 AoAs), the base station 110 or the DU 210 may determine candidate angles by using a correlation-based AoA estimation algorithm described in the [Equation 1] to the [Equation 7]. For example, the base station 110 may select 8 candidate angles having the largest squared L2 norm of a correlation. The base station 110 may report the selected 8 candidate angles to the location management server 230. Meanwhile, in order to report the plurality of AoAs, a search range of AoAs may increase. In order to include all mirror angles generated by angle ambiguity, the search range may be set wider than a search range in a case of estimating a single AoA. However, an angle estimation scheme using an excessively wide search range is difficult to distinguish a signal of another terminal. It is required to distinguish whether an angle selected based on a correlation is a mirror angle for the terminal 120 or an angle for a signal of the another terminal. As a spacing between antennas increases, MIMO transmission/reception performance may increase. It is because that a correlation of signals received per antenna decreases and an antenna diversity characteristic becomes better as the spacing between the antennas increases. Since an MMU for a modem of the base station 110 or the RU 220 has less size limitation than the terminal 120, a margin for the spacing between the antennas is high in order to improve the MIMO transmission/reception performance. Therefore, a case in which the spacing between the antennas provided in the base station 110 or the RU 220 is larger frequently exists. However, as the spacing between the antennas increases, since a coverable angle range increases, the angle ambiguity may occur more frequently. The base station 110 may report the plurality of AoAs to the location management server 230 in order to resolve the angle ambiguity and increase positioning performance of the terminal 120. The base station 110 may widen a search range in order to obtain the plurality of AoAs. The number of candidate angles also increases due to the widened search range. When the base station 110 calculates a correlation for all candidate angles, an amount of computation in the base station 110 increases. A high amount of computation may increase implementation complexity of an algorithm. For example, in order to search a range of [-60, 60] in a horizontal domain and a range of [-30, 30] in a vertical domain with an interval of 0.1 degree, complex multiplication operations for a received RS signal are required for each of a total of (1201 * 601) or (1201 + 601) steering vectors.

In the present disclosure, a search range set such that the angle ambiguity does not occur based on antenna array information (e.g., a spacing between antenna elements, a spacing d_{H} between antenna elements in the horizontal domain, and a spacing d_{V} between antenna elements in the vertical domain) may be used. In addition, a method for more accurately deriving a mirror AoA from an AoA obtained through the search range is described. For example, in a first example, an angle between two signals may be a₁, and in a second example, an angle between two signals may be a₂. However, a phase difference between the two signals in the first example may be identical to a phase difference between the two signals in the second example. Due to a periodic characteristic of a sinusoidal wave, cases having the same phase difference but having different angles may occur. As such, an AoA value that has a value different from the estimated AoA but has the same phase difference characteristic may be referred to as the mirror AoA.

A node (e.g., the base station 110, or the DU 210) according to embodiments of the present disclosure may estimate an AoA with low complexity by limiting a search range of AoAs to a range in which a mirror AoA does not occur before performing a correlation operation of a steering vector. By deriving mirror AoAs based on the estimated AoA and the periodic characteristic of the sinusoidal wave, a correlation operation procedure for obtaining the mirror AoA may be omitted. In addition, an estimation error rate that may occur through the correlation operation may decrease.

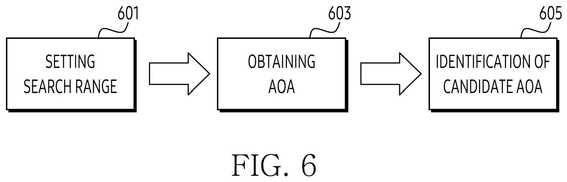

FIG. 6 illustrates an example of a procedure for configuring an AoA set based on a spacing between antennas. The AoA set may include a reference AoA and at least one mirror AoA associated with the reference AoA. According to an embodiment, the AoA set may be configured for each dimension. For example, in a 2D antenna array (e.g., the 2D antenna array 450), an AoA set may be configured for each of a horizontal domain and a vertical domain. Also, for example, in a linear array (e.g., the plurality of antennas 401-1, ..., 401-i, ..., 401-M-1, 401-M of FIG. 4A), an AoA set for a first dimension may be configured. In the present disclosure, *ϕ* or *θ* may be used to describe an angle for a dimension (e.g., an AoA for each dimension). In the following example, even if a subscript varies according to a type of an angle, *θ* indicates a value associated with an angle for a vertical dimension (e.g., a zenith angle), and *ϕ* indicates a value associated with an angle for a horizontal dimension (e.g., an azimuth angle).

Referring to FIG. 6, the procedure for configuring the AoA set may include setting a search range 601, obtaining an AoA 603, and identification of a candidate AoA 605. Hereinafter, the procedure for configuring the AoA set is described as operations by a base station 110 for reporting multiple AoAs, but embodiments of the present disclosure are not limited thereto. In a distributed deployment scenario, operations of the base station 110 described below may be divided into operations of a DU 210 and operations of an RU 220. For example, an operation of receiving an uplink signal (e.g., SRS, or positioning SRS) from a terminal 120 at the base station 110 may be performed at the RU 220. Also, for example, an operation of transmitting multiple AoA values to a location management server 230 at the base station 110 may be performed at the DU 210.

### 1. Setting the search range 601

The base station 110 may obtain antenna array information of the base station 110. The antenna array information may include a spacing between antennas of an array antenna. For example, the antenna array information may include a spacing d_{H} of the horizontal domain of the 2D antenna array and a spacing d_{V} of the vertical domain. As an example, if the spacing d_{H} of the horizontal domain and the spacing d_{V} of the vertical domain are the same, it may be represented as a single parameter d.

The base station 110 may set an AoA search range in which angle ambiguity does not occur based on the antenna array information. The base station 110 may determine candidate angles within the set AoA search range. The base station 110 may generate steering vectors for the candidate angles. In order to describe embodiments of the present disclosure, the environments of FIG. 4B to FIG. 4D are assumed. In addition, a range of an angle in the vertical domain may be 0° ≤ *θ*(*degree*) ≤ 180° ( $θ \left(degree\right) = θ \times \frac{180}{π}$), and a range of an angle in the horizontal domain may be -90° ≤ *ϕ*(*degree*) ≤ 90° ( $ϕ \left(degree\right) = ϕ \times \frac{180}{π}$). However, a limitation of the range of the angle is only exemplary for description, and is not construed as limiting embodiments of the present disclosure.

### 2. Obtaining the AoA 603

In order to describe a relationship between angle ambiguity and a steering vector, the [Equation 7] may be referred to. If a following equation for two steering vectors (e.g., a vector (*ϕ_{y}*, *θₓ*) and a vector (*ϕ_{H}*, *θ_{V}*)) is satisfied, the [Equation 7] may be satisfied.$2 πbn sin {θ}_{x} {sinϕ}_{y} = 2 πbn sin {θ}_{V} {sinϕ}_{H} + 2 πng$$2 πam {cosθ}_{x} = 2 πam {cosθ}_{V} + 2 πmk$

n indicates an antenna index of the horizontal dimension (e.g., a y-axis) (when the number of antennas arranged in the horizontal dimension is N, 0 ≤ *n* ≤ *N* - 1), and m indicates an antenna index of the vertical dimension (e.g., a z-axis) (when the number of antennas arranged in the vertical dimension is M, 0 ≤ *m* ≤ *M* - 1). dv indicates the spacing between antennas in the vertical dimension (hereinafter, a vertical spacing or a first spacing). d_{H} indicates the spacing between antennas in the horizontal dimension (hereinafter, a horizontal spacing or a second spacing). In $a = \frac{{d}_{V}}{{λ}_{0}} , b = \frac{{d}_{H}}{{λ}_{0}}$, 'a' indicates a spacing between antennas normalized by a wavelength in a first dimension (e.g., the vertical dimension), and 'b' indicates a spacing between antennas normalized by a wavelength in a second dimension (e.g., the horizontal dimension). g and k are integers, respectively.

When both sides of the [Equation 8] and the [Equation 9] are divided by 2π, they are as follows.$bn {sinθ}_{x} {sinϕ}_{y} = bn {sinθ}_{V} {sinϕ}_{H} + ng$$am {cosθ}_{x} = am {cosθ}_{V} + mk$

Assume that g and k are real numbers that are not integers.$p = ng + mk = n \left(\left⌊g\right⌋+α\right) + m \left(\left⌊k\right⌋+β\right)$

Herein, 0 ≤ *α* ≤ 1, 0 ≤ *β* ≤ 1, and in order for *p* = *ng* + *mk* to be an integer for all (*m*, *n*) from the equation, *nα* + *mβ* should be an integer for all (*m*, *n*). Since (*n* + 1)*α* + *mβ* and *nα* + (*m* + 1)*β* should also be integers, and each difference should also be an integer, in order to satisfy this for all (*m*, *n*), it is required to be (*α* = 0, *β* = 0). In other words, *g, k* should be integers. For all m and n, a condition that g and k should necessarily be integers indicates that, when searching for mirror AoAs, even if they are found in a time-series manner (e.g., a vertical dimension - horizontal dimension order, or a horizontal dimension - vertical dimension order) without finding them at once, all mirror AoAs may be identified.

### (1) An AoA of the vertical dimension (hereinafter, a first AoA) (e.g., the zenith angle)

As described above, the angle ambiguity may occur when a difference for the plurality of candidate angles differs by an integer multiple of 2π. When the difference for the plurality of candidate angles exists within a range [-*π*, *π*], the angle ambiguity may not occur. When a steering vector (e.g., the vector (*ϕ_{y}*, *θₓ*)) is assumed, a range in which the angle ambiguity does not occur may be represented as a following equation.$- π \leq 2 πa {cosθ}_{x} \leq π$

In $a = \frac{{d}_{V}}{{λ}_{0}} , b = \frac{{d}_{H}}{{λ}_{0}}$, a indicates the spacing between antennas normalized by the wavelength in the first dimension (e.g., the vertical dimension), and b indicates the spacing between antennas normalized by the wavelength in the second dimension (e.g., the horizontal dimension). *λ*₀ indicates a wavelength, and *θₓ* indicates a candidate zenith angle. *θₓ* satisfying the condition of the above-described equation may be determined according to the spacing between antennas in the vertical domain (hereinafter, the first spacing *d_{V}*).

When a characteristic of a trigonometric function and a constant are considered, the [Equation 13] may be represented as following equations.$- min \left[\frac{1}{2 a}, 1\right] \leq {cosθ}_{x} \leq min \left[\frac{1}{2 a}, 1\right]$${cos}^{- 1} \left(min\left[\frac{1}{2 a}, 1\right]\right) \leq {θ}_{x} \leq π - {cos}^{- 1} \left(min\left[\frac{1}{2 a}, 1\right]\right)$

For example, in a case that the first spacing is less than or equal to a half of the wavelength *λ*₀ of the signal (hereinafter, a half wavelength), a search range for the first AoA ***θₓ*** may be 0 ≤ *θₙ* ≤ π. However, in a case that the first spacing is greater than the half wavelength, a search range for the first AoA *θₓ* may be determined based on the [Equation 14] and the [Equation 15]. In other words, in a case of *d_{V}* > 0.5*λ*₀, since the angle ambiguity does not occur in an entire range of 0° ≤ *θ*(*degree*) ≤ 180°, the base station 110 may set a search range for estimation of the first AoA as the entire range. However, in a case of *d_{V}* > 0.5*λ*₀, the base station 110 may set the search range for the estimation of the first AoA based on the angle ambiguity, the first spacing, and a length of the half wavelength.

The base station 110 may determine the first AoA based on a correlation operation. The first AoA may indicate an AoA in the first dimension (e.g., the vertical dimension). For example, the first AoA may be referred to as a reference zenith angle. For example, the base station 110 may determine the first AoA based on following equations.${s}_{m} \left({θ}_{x}\right) = exp \left(j2πam {cosθ}_{x}\right)$${CORR}_{V} \left({θ}_{x}\right) = {\sum }_{n = 0}^{N - 1} {\left‖{\sum }_{m = 0}^{M - 1} {s}_{m}^{∗} \left({θ}_{x}\right) {y}_{n , m}\right‖}^{2}$${θ}_{V} = {argmax}_{{θ}_{x}} \left\{{CORR}_{V}\left({θ}_{x}\right)\right\}$

*θ_{V}* indicates the first AoA. For example, the first AoA may be referred to as the reference zenith angle. m indicates a location of an antenna for the vertical dimension (e.g., the first dimension). In $a = \frac{{d}_{V}}{{λ}_{0}} , b = \frac{{d}_{H}}{{λ}_{0}}$, a indicates the spacing between antennas normalized by the wavelength in the first dimension (e.g., the vertical dimension), and b indicates the spacing between antennas normalized by the wavelength in the second dimension (e.g., the horizontal dimension). ***y*_{*n*,*m*}** indicates a result of decorrelation of a signal received at an (m, n)-th antenna and an RS sequence.

### (2) An AoA of the horizontal dimension (hereinafter, a second AoA) (e.g., the azimuth angle)

As in the vertical domain, the angle ambiguity occurs when the difference for the plurality of candidate angles is an integer multiple of 2π. When the steering vector (e.g., the vector (*ϕ_{y}*, *θₓ*)) is assumed, a range in which the angle ambiguity does not occur may be represented as a following equation.$- π \leq 2 πb {sinθ}_{V} {sinϕ}_{y} \leq π$

In $b = \frac{{d}_{H}}{{λ}_{0}}$, *g* indicates an arbitrary integer, *θ_{V}* indicates a candidate zenith angle, and *ϕ_{y}* indicates a candidate azimuth angle. Referring to the above-described equation, a range of *ϕ_{y}* is dependent not only on *d_{H}*, which is the spacing between antennas in the horizontal domain, but also on *θ_{V}* corresponding to the first AoA. Therefore, an estimation method of the second AoA may vary according to whether the first AoA value is obtained.

According to an embodiment, in a situation that the first AoA value is given, the base station 110 may estimate the second AoA. The base station 110 may use the previously estimated first AoA, or may estimate the first AoA first and then sequentially estimate the second AoA. At this time, a wavelength to be compared with the spacing (e.g., the second spacing d_{H}) between antennas may use $\frac{{λ}_{0}}{sin {θ}_{V}}$ instead of *λ*₀. In a case that the second spacing is less than or equal to $\frac{{λ}_{0}}{sin {θ}_{V}}$, the base station 110 may set a search range for estimation of the second AoA as an entire range. For example, the entire range may be $- \frac{π}{2} \leq {ϕ}_{y} \leq \frac{π}{2}$. In a case that the second spacing is greater than $\frac{{λ}_{0}}{sin {θ}_{V}}$, the base station 110 may set the search range for estimation of the second AoA based on a following equation.$- min \left(\frac{1}{2 b sin {θ}_{V}}, 1\right) \leq sin {ϕ}_{y} \leq min \left(\frac{1}{2 b sin {θ}_{V}}, 1\right)$$- {sin}^{- 1} \left(min\left(\frac{1}{2 b sin {θ}_{V}}, 1\right)\right) \leq {ϕ}_{y} \leq {sin}^{- 1} \left(min\left(\frac{1}{2 b sin {θ}_{V}}, 1\right)\right)$

The search range for the second AoA *ϕ_{y}* may be determined based on the [Equation 20] and the [Equation 21]. The base station 110 may determine the second AoA based on the correlation operation. The second AoA may indicate an AoA in the second dimension (e.g., the horizontal dimension). For example, the second AoA may be referred to as a reference azimuth angle. For example, the base station 110 may determine the second AoA based on following equations.${s}_{n} \left({ϕ}_{y}\left|{θ}_{V}\right.\right) = exp \left(j2πbn sin {θ}_{V} sin {ϕ}_{y}\right)$${CORR}_{H} \left({ϕ}_{y}\left|{θ}_{V}\right.\right) = {{\sum }_{m = 0}^{M - 1} \left‖{\sum }_{n = 0}^{N - 1} {s}_{n}^{∗} \left({ϕ}_{y}\left|{θ}_{V}\right.\right) {y}_{n , m}\right‖}^{2}$${ϕ}_{H} = {argmax}_{{ϕ}_{y}} \left\{{CORR}_{H}\left({ϕ}_{y}\left|{θ}_{V}\right.\right)\right\}$

*ϕ_{y}* indicates the second AoA. m indicates a location of an antenna for the vertical dimension (e.g., the first dimension), and n indicates a location of an antenna for the horizontal dimension (e.g., the second dimension). In $a = \frac{{d}_{V}}{{λ}_{0}} , b = \frac{{d}_{H}}{{λ}_{0}}$, a indicates the spacing between antennas normalized by the wavelength in the first dimension (e.g., the vertical dimension), and b indicates the spacing between antennas normalized by the wavelength in the second dimension (e.g., the horizontal dimension). *y_{n,m}* indicates the result of decorrelation of the signal received at the (m, n)-th antenna and the RS sequence.

The base station 110 may determine a search range for estimation of the first AoA (hereinafter, a first search range). The base station 110 may determine a search range for estimation of the second AoA (hereinafter, a second search range). The base station 110 may obtain AoAs based on the first search range and the second search range. The base station 110 may obtain the first AoA based on the first search range. The first AoA may be referred to as a first reference AoA or the reference zenith angle, as a value serving as a reference for configuring the AoA set in the first dimension (e.g., the vertical domain). The base station 110 may obtain the second AoA based on the second search range. The second AoA may be referred to as a second reference AoA or the reference azimuth angle, as a value serving as a reference for configuring the AoA set in the second dimension (e.g., the horizontal domain).

In a step of setting the search range 601, both the first search range and the second search range are set as ranges for preventing the angle ambiguity from occurring. For example, the first search range may be represented [*θₘᵢₙ, θₘₐₓ*], and the second search range may be represented as [*ϕₘᵢₙ, ϕₘₐₓ*]. Based on a resolution (e.g., *θₛₜₑₚ*, or *ϕₛₜₑₚ*) of an AoA estimation value to be estimated, the base station 110 may determine candidate angle sets. For example, the candidate angle sets in each domain may be represented as following equations.${θ}_{n} = {θ}_{min} + {nθ}_{step} , n = 0 , 1 , 2 , …$$ϕ = {ϕ}_{min} + {mϕ}_{step} , m = 0 , 1 , 2 , …$

As an example, in a standard of 3GPP Release 17, since it is specified to report an AoA in units of 0.1 to an LMF, *θₛₜₑₚ* and *ϕₛₜₑₚ* may be set to 0.1 degrees, respectively.

The base station 110 may obtain the first AoA through the correlation operation. The base station 110 may obtain the second AoA through the correlation operation. The base station 110 may estimate the first AoA in the first search range in which the angle ambiguity does not occur for the vertical domain, and may estimate the second AoA in the second search range in which the angle ambiguity does not occur for the horizontal domain.

### 3. The Identification of Candidate AoA 605

Since a probability of a phase difference that may occur overlappingly according to a characteristic of the sinusoidal wave is reduced by limiting a search range, the base station 110 may determine mirror AoAs through an operation according to the angle ambiguity, not the correlation operation with a steering vector. The base station 110 may identify at least one first candidate AoA based on the first AoA (e.g., the reference zenith angle). For example, the at least one first candidate AoA may include the first AoA and a mirror AoA derived according to the [Equation 11]. The base station 110 may identify at least one second candidate AoA based on the second AoA. For example, the at least one second candidate AoA may include the second AoA and a mirror AoA derived according to the [Equation 10].

The base station 110 may determine the at least one first candidate AoA based on the first AoA. The base station 110 may determine the at least one first candidate AoA based on the first AoA and the first spacing (that is, in the vertical domain, the spacing dᵥ between antennas). For example, the base station 110 may determine the at least one first candidate AoA based on a following equation.$2 πa {cosθ}_{{x}_{k}} = 2 πa {cosθ}_{V} + 2 πk$$a {cosθ}_{{x}_{k}} = a {cosθ}_{V} + k$

*θ_{V}* indicates the first AoA (e.g., the reference zenith angle) obtained through the correlation operation (e.g., the [Equation 16] to the [Equation 18]). *k* is an integer, and *θ_{xₖ}* indicates a mirror AoA value included in the at least one first candidate AoA. For example, *θ*_{*x*ₒ} = *θ_{V}*. The [Equation 28] may be arranged as below through following equations.${cosθ}_{{x}_{k}} = {cosθ}_{V} + \frac{k}{a}$${θ}_{{x}_{k}} = {cos}^{- 1} \left({cosθ}_{V}+\frac{k}{a}\right)$

The base station 110 may identify the at least one first candidate AoA through the integer k. Meanwhile, since an inverse function of a cosine is defined only when an input variable is in a range of [-1, 1], a range of k may be determined according to a following equation.$- a \leq a cos {θ}_{V} + k \leq a$$\left⌈-a\left(1+{cosθ}_{V}\right)\right⌉ \leq k \leq \left⌊a\left(1-{cosθ}_{V}\right)\right⌋$

The base station 110 may identify the at least one first candidate AoA through the integer k. As an example, by substituting a plurality of integer values into *k*, the at least one first candidate AoA may be identified. Since *k* is the integer, a function ceil(x) (e.g., a symbol $\left⌈x\right⌉$) and a function floor(y) (e.g., a symbol $\left⌊y\right⌋$) may be used. ceil(x) indicates the smallest integer among integers greater than or equal to x. floor(y) indicates the largest integer among integers less than or equal to y.

The base station 110 may identify the at least one first candidate AoA based on the first AoA and the first spacing, as described through the [Equation 29] to the [Equation 32]. The base station 110 may transmit a measurement message including the first AoA and the at least one first candidate AoA to a location management server (e.g., the LMF 230). Meanwhile, the number of AoA values greater than the maximum number (e.g., 8) of AoA values allowed in the measurement message may be obtained. The base station 110 may identify one or more among the derived at least one first candidate AoA. As a non-limiting example, according to an embodiment, the base station 110 may exclude values far from a center angle (e.g., 90 degrees), that is, an angle closest to a lower bound angle (e.g., 0 degrees) or an upper bound angle (e.g., 180 degrees) of the search range, from the AoA set. The first AoA and the at least one first candidate AoA to be reported to the location management server 230 may be referred to as a first AoA set.

The base station 110 may determine the at least one second candidate AoA based on the second AoA (e.g., the reference azimuth angle). The base station 110 may determine the at least one second candidate AoA based on the second AoA and the second spacing (that is, in the horizontal domain, the spacing d_{H} between antennas). The base station 110 may determine the at least one second candidate AoA based on the first AoA, the second AoA, and the second spacing. However, if mirror AoAs are determined according to the [Equation 10] based only on the first AoA and the second AoA, an effect of a mirror angle in the vertical dimension (e.g., one among the at least one first candidate AoA different from the first AoA) on angles (e.g., azimuth angles) in the horizontal dimension may not be considered. For example, in the [Equation 10], '*θₓ*' (≠ *θ_{V}*) and '*θ_{V}*' are considered as the zenith angle (or an elevation angle), which is an element for the vertical dimension. Since an effect of the azimuth angle in a case that the zenith angle is ' *θₓ*' is different from an effect of the azimuth angle in a case that the zenith angle is '*θ_{V}*', in order to identify the more accurate at least one second candidate AoA, the effect may be required to be compensated.

According to embodiments, the base station 110 (or the DU 210) may correct the second AoA (e.g., the reference azimuth angle) for each AoA of the first AoA set for the first dimension (e.g., the vertical dimension). Since the second AoA is a value derived based on the first AoA, if a first candidate AoA of the first AoA set, which is different from the first AoA, is assumed in the first dimension, a difference between the first AoA and the first candidate AoA may be required to be corrected. The base station 110 (or the DU 210) may determine a ratio of a sine value of the first candidate AoA to a sine value of the first AoA in order to correct an effect due to the difference between the first AoA and the first candidate AoA. The base station 110 (or the DU 210) may determine a correction angle for the second AoA according to the ratio. For example, the base station 110 (or the DU 210) may determine the correction angle for the second AoA based on a following equation.$sin {ϕ}_{{y}_{k , 0}} = \frac{sin {θ}_{V} sin {ϕ}_{H}}{sin {θ}_{{x}_{k}}}$

*ϕy_{k,o}* indicates the correction angle, *θ_{xₖ}* indicates the first candidate AoA among the at least one first candidate AoA, k indicates an index of the first candidate AoA, *θ_{V}* indicates the first AoA, and *ϕ_{H}* indicates the second AoA.

The base station 110 (or the DU 210) may determine the at least one second candidate AoA in the second dimension (e.g., the horizontal dimension), for each AoA of the first AoA set for the first dimension (e.g., the vertical dimension). The base station 110 (or the DU 210) may determine the at least one second candidate AoA based on a correction angle for a corresponding first candidate AoA, the corresponding first candidate AoA, and the second spacing between antennas in the second dimension. For example, the first AoA set indicates a set of zenith angles. The at least one second candidate AoA is included in a second AoA set, and the second AoA set indicates a set of azimuth angles. For example, the base station 110 may determine the at least one second candidate AoA based on a following equation.$2 π b sin {θ}_{{x}_{k}} sin {ϕ}_{{y}_{k , g}} = 2 π b sin {θ}_{{x}_{k}} sin {ϕ}_{{y}_{k , 0}} + 2 π g$

*θ_{xₖ}* indicates a value included in the first AoA set. *g* is an integer, and *ϕ_{y_{k,g}}* indicates a mirror AoA value included in the at least one second candidate AoA. The [Equation 34] may be represented as a following equation.$b sin {θ}_{{x}_{k}} sin {ϕ}_{{y}_{k , g}} = b sin {θ}_{{x}_{k}} sin {ϕ}_{{y}_{k , 0}} + g$$sin {ϕ}_{{y}_{k , g}} = sin {ϕ}_{{y}_{k , 0}} + \frac{g}{b sin {θ}_{{x}_{k}}}$${ϕ}_{{y}_{k , g}} = {sin}^{- 1} \left(sin {ϕ}_{{y}_{k , 0}}+\frac{g}{b sin {θ}_{{x}_{k}}}\right)$

The base station 110 (or the DU 210) may identify the at least one second candidate AoA through the integer g. Meanwhile, since an inverse function of a sine is defined only when an input variable is in a range of [-1, 1], a range of g may be determined according to a following equation.$- b sin {θ}_{{x}_{k}} \leq b sin {θ}_{{x}_{k}} sin {ϕ}_{{y}_{k , 0}} + g \leq b sin {θ}_{{x}_{k}}$$\left⌈-b sin {θ}_{{x}_{k}}\left(1+sin {ϕ}_{{y}_{k , 0}}\right)\right⌉ \leq g \leq \left⌊b sin {θ}_{{x}_{k}}\left(1-sin {ϕ}_{{y}_{k , 0}}\right)\right⌋$

The base station 110 (or the DU 210) may identify the at least one second candidate AoA through the integer g. As an example, by substituting a plurality of integer values into *g*, the at least one second candidate AoA may be identified. Since *g* is the integer, the function ceil(x) (e.g., the symbol $\left⌈x\right⌉$) and the function floor(y) (e.g., the symbol $\left⌊y\right⌋$) may be used. ceil(x) indicates the smallest integer among integers greater than or equal to x. floor(y) indicates the largest integer among integers less than or equal to y.

The base station 110 may identify the at least one second candidate AoA by correcting an effect due to a mirror angle difference in the first dimension, as described through the [Equation 33] to the [Equation 39]. The base station 110 may transmit a measurement message including the second AoA and the at least one second candidate AoA to the location management server (e.g., the LMF 230). Meanwhile, the number of AoA values greater than the maximum number (e.g., 8) of AoA values allowed in the measurement message may be obtained. The base station 110 may identify one or more among the derived at least one second candidate AoA. As a non-limiting example, according to an embodiment, the base station 110 may exclude values far from the center angle (e.g., 90 degrees), that is, an angle closest to the lower bound angle (e.g., 0 degrees) or the upper bound angle (e.g., 180 degrees) of the search range, from the AoA set. The second AoA and the at least one second candidate AoA to be reported to the location management server 230 may be referred to as the second AoA set.

The location management server 230 may estimate the location of the terminal 120 based on a first AoA set and a second AoA set. By using a plurality of AoA values including mirror AoAs, rather than simply using only a single AoA value per a specific domain (e.g., the horizontal domain, or the vertical domain), positioning performance of the location management server 230 may be improved.

In FIG. 6, it has been described that the first AoA set for the vertical domain is determined and then the second AoA set for the horizontal domain is determined, however, embodiments of the present disclosure are not limited thereto. According to an embodiment, the first AoA set for the vertical domain may of course be determined after the second AoA set for the horizontal domain is determined. In addition, an order in a sequential estimation method may also be such that a steering vector for the horizontal domain is generated and then a steering vector for the vertical domain is generated.

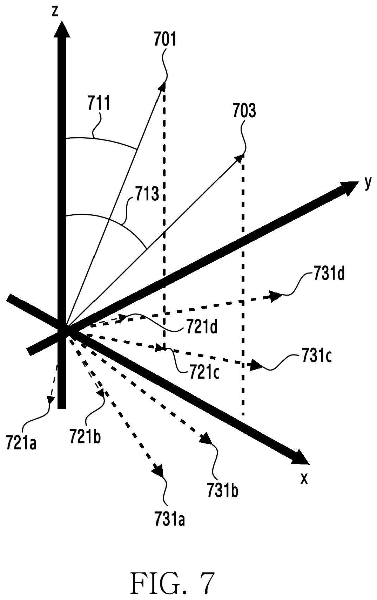

FIG. 7 illustrates an example of a dimension compensation for determining an AoA set.

Referring to FIG. 7, a first vector 701 indicates a vector according to a first AoA 711 and a second AoA 721c. A second vector 703 indicates a vector according to a first candidate AoA 713 and a second AoA 731c. The second AoA 721c may correspond to the second AoA 731c. For example, an electronic device may assume the first vector 701 and identify at least one second candidate AoA (e.g., a second candidate AoA 721a, a second candidate AoA 721b, and a second candidate AoA 721d) having a mirror AoA relationship with respect to the second AoA 721c. For example, the electronic device may assume the second vector 703 and identify at least one second candidate AoA (e.g., a second candidate AoA 731a, a second candidate AoA 731b, and a second candidate AoA 731d) having a mirror AoA relationship with respect to the second AoA 731c. As illustrated in FIG. 7, even if the same second AoA is assumed in a horizontal dimension, when the first AoA assumed in a vertical dimension is different, a result of different mirror AoAs may be derived. This is because an effect of the first AoA 711 and the first candidate AoA 713 on the second AoA 721c (= the second AoA 731c) is different from each other. Accordingly, the electronic device (e.g., the base station 110, or the DU 210) according to embodiments may be required to reflect an effect of a difference between the first AoA 711 and the first candidate AoA 713 on the horizontal dimension when determining candidate AoAs in the horizontal dimension using the second AoA 721c (= the second AoA 731c).

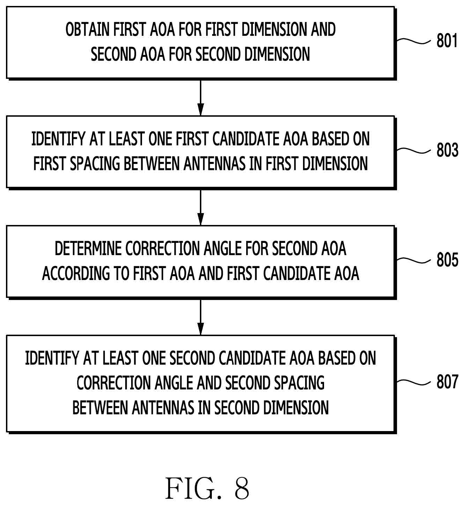

FIG. 8 illustrates an operation flow of an electronic device (e.g., the base station 110, or the DU 210) for determining an AoA set using a dimension compensation.

Referring to FIG. 8, in operation 801, the electronic device (e.g., the base station 110, or the DU 210) may obtain a first AoA for a first dimension (e.g., a vertical dimension) and a second AoA for a second dimension (e.g., a horizontal dimension). The electronic device may obtain AoAs for uplink signals from a terminal (e.g., the terminal 120). For example, the uplink signals may be SRS (e.g., SRSs for uplink channel estimation, or positioning SRS specified for position estimation). As another example, the uplink signals may be DMRSs. The uplink signals may be received through a plurality of antennas. An incident angle based on the plurality of antennas may be divided according to a dimension. For example, the angle may be specified as an angle for the first dimension (e.g., a zenith angle, or an elevation angle) and an angle for the second dimension (e.g., an azimuth angle). The plurality of antennas may correspond to antenna elements of a two-dimensional array antenna. According to an implementation example, the plurality of antennas may be included in the electronic device (e.g., the base station 110, or the MMU), or may be included in a separate device (e.g., the RU 220) connected to the electronic device. In a case that the separate device receives the uplink signals, the separate device may provide the electronic device with the received uplink signals.

The electronic device may identify a first spacing between antennas in a first direction (e.g., a vertical domain). For example, the first direction means one of two directions perpendicular to each other in a two-dimensional antenna array. A direction perpendicular to the first direction corresponds to a second direction (e.g., a horizontal domain). The electronic device may determine a first search range based on the first spacing and angle ambiguity. The electronic device may determine the first search range based on whether the first spacing is greater than a length of a half wavelength of the received signal. For example, in a case that the first spacing is less than or equal to the length of the half wavelength, the electronic device may determine the first search range as an entire range (e.g., 0 degrees to 180 degrees) searchable in the vertical domain. The electronic device may, in a case that the first spacing is greater than the length of the half wavelength, determine the first search range as a range of an upper bound and a lower bound determined based on the first spacing and a length of a wavelength. For example, a sum of the upper bound and the lower bound may be 180 degrees. As an example, the first search range may be determined based on the [Equation 15]. The electronic device may obtain the first AoA through a correlation operation of the received signal within the first search range. As an example, the first AoA may be obtained through the [Equation 16] to the [Equation 18]. The first AoA may be referred to as a first reference AoA, a reference zenith angle, a first reference angle, a reference candidate AoA, a preliminary AoA, a first preliminary AoA, and/or an equivalent technical term, in terms of that the first AoA is an angle fixed in advance in order to find a mirror angle according to the angle ambiguity.

The electronic device may identify a second spacing between antennas in a second direction (e.g., a horizontal domain). For example, the second direction means one of the two directions perpendicular to each other in the two-dimensional antenna array. The electronic device may determine a second search range based on the second spacing and the angle ambiguity. The electronic device may determine the second search range based on whether the first spacing is greater than the length of the half wavelength of the received signal. According to an embodiment, the electronic device may determine the second search range based on the first AoA estimated in the first search range. As an example, the second search range may be determined based on the [Equation 21]. The electronic device may obtain the second AoA through a correlation operation of the received signal within the second search range. As an example, the second AoA may be obtained through the [Equation 22] to the [Equation 24]. The second AoA may be referred to as a second reference AoA, a reference azimuth angle, a second reference angle, a reference candidate AoA, a preliminary AoA, a second preliminary AoA, and/or an equivalent technical term, in terms of that the second AoA is an angle fixed in advance in order to find the mirror angle according to the angle ambiguity.

In operation 803, the electronic device (e.g., the base station 110, or the DU 210) may identify at least one first candidate AoA based on the first spacing between antennas in the first dimension. The electronic device (e.g., the base station 110, or the DU 210) may identify at least one value having a mirror AoA relationship with the first AoA. Herein, the mirror AoA relationship means a relationship between values in which, despite the same phase difference according to a periodic characteristic of a sinusoidal wave, an actual angle difference is different. The electronic device (e.g., the base station 110, or the DU 210) may identify the at least one first candidate AoA having the mirror AoA relationship based on a designated operation with reference to the first AoA, instead of performing a correlation operation for each of possible candidate values (e.g., zenith angle candidates) in the possible first dimension (e.g., the vertical dimension). For example, in order to identify the at least one first candidate AoA, the [Equation 27] to the [Equation 32] may be referred to.

In operation 805, the electronic device (e.g., the base station 110, or the DU 210) may determine a correction angle for the second AoA according to the first AoA and the first candidate AoA. One of the first AoA derived in the operation 801 and the at least one first candidate AoA derived in the operation 803 has a different effect on the second AoA. Accordingly, instead of directly using the second AoA, a component according to a difference between the first AoA and one of the at least one first candidate AoA (hereinafter, a first candidate AoA) may be applied to the second AoA. The correction angle for the second AoA may be derived by applying, to the second AoA, the component according to the difference between the first AoA and the first candidate AoA. For example, in order to determine the correction angle, the [Equation 33] may be referred to.

In operation 807, the electronic device (e.g., the base station 110, or the DU 210) may identify at least one second candidate AoA based on the correction angle and the second spacing between antennas in the second dimension. The electronic device (e.g., the base station 110, or the DU 210) may identify at least one value having a mirror AoA relationship with the second AoA. The electronic device (e.g., the base station 110, or the DU 210) may identify the at least one second candidate AoA having the mirror AoA relationship with the second AoA based on a designated operation with reference to the correction angle, instead of performing a correlation operation for each of possible candidate values in the possible second dimension (e.g., the horizontal dimension). For example, in order to identify the at least one second candidate AoA, the [Equation 34] to the [Equation 39] may be referred to.

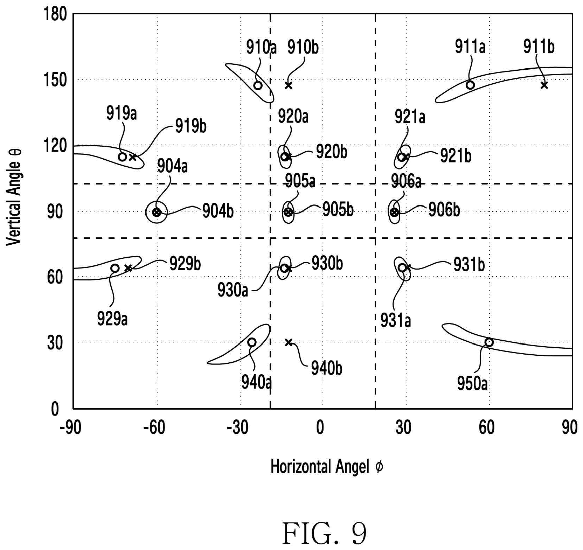

FIG. 9 illustrates a correlation relationship between steering vectors according to a first AoA and a second AoA. In FIG. 9, an AoA measurement result using a two-dimensional (2D) antenna array (e.g., 64 antenna elements) in which four antennas are arranged in a vertical dimension and sixteen antennas are arranged in a horizontal dimension is described. It is assumed that an actual angle of arrival (or an angle of arrival direction) is about 60 degrees in a horizontal domain and about 30 degrees in a vertical domain (hereinafter, [60, 30]).

Referring to FIG. 9, a graph 900 indicates points according to a vertical angle and a horizontal angle of a steering vector of a signal. A horizontal axis of the graph 900 indicates an azimuth angle within a range of about -90 degrees to about 90 degrees, and a vertical axis of the graph 900 indicates a zenith angle within a range of about 0 degrees to about 180 degrees. In the graph 900, as described with reference to FIG. 6 to FIG. 8, 'O' indicates an estimation result using a correction angle (e.g., using *ϕ*_{*y*_{*k*,o}}) of the [Equation 33]) for a second AoA (hereinafter, a first scheme) in order to reflect an effect of a mirror angle in the vertical dimension, and 'X' indicates an estimation result simply using the second AoA (hereinafter, a second scheme) without a procedure of deriving the correction angle.

The first AoA (e.g., a reference zenith angle) is determined within a first search range according to the vertical dimension, and the second AoA is determined within a second search range according to the horizontal dimension. An angle 905a indicates the first AoA and the second AoA according to the first scheme. An angle 905b indicates the first AoA and the second AoA according to the second scheme. Since the second AoA is derived in a state in which the first AoA is assumed (e.g., *ϕ*_{*y*_{0,0}} = *ϕ_{H}, θ*_{*x*₀} = *θ_{V}*) in a derivation process, it may be confirmed that the angle 905a and the angle 905b have almost no difference. In the graph 900, a rectangular region (e.g., around 0 degrees of the horizontal angle, around 90 degrees of the vertical angle) in which the angle 905a and the angle 905b are located may indicate a region in which angle ambiguity does not occur. A difference between the first scheme and the second scheme is to reflect an effect that the difference between the first AoA and a first candidate AoA in the vertical dimension has on the horizontal dimension. Accordingly, in a state in which the same first AoA is assumed, second candidate AoAs having the mirror relationship with the second AoA may not have a large difference in results between the first scheme and the second scheme. For example, an angle 904a and an angle 906a indicate mirror angles for the angle 905a. An angle 904b and an angle 906b indicate mirror angles for the angle 905b. As illustrated in the graph 900, it may be confirmed that the angle 904a and the angle 904b have almost no difference. It may be confirmed that the angle 906a and the angle 906b have almost no difference.

However, when a reference angle in the vertical dimension becomes different from the first AoA, an estimation error may gradually increase. The electronic device (e.g., the base station 110, or the DU 210) may identify mirror angles (e.g., an angle 911a, an angle 919a, an angle 921a, an angle 940a, and an angle 950a) for the angle 905a according to the first scheme. The electronic device (e.g., the base station 110, or the DU 210) may identify mirror angles (e.g., an angle 911b, an angle 919b, an angle 921b, and an angle 940b) for the angle 905a according to the second scheme. For example, it may be confirmed that a difference between an angle 920a and an angle 920b becomes greater than a difference between the angle 905a and an angle 950b. For example, it may be confirmed that a difference between an angle 930a and an angle 930b becomes greater than a difference between the angle 905a and the angle 950b. As a point corresponding to the angle 905a corresponding to the first AoA and the second AoA is farther deviated, it may be confirmed that such a difference becomes greater. In summary, in the graph 900, a difference between candidate AoAs according to the first scheme and candidate AoAs according to the second scheme may be confirmed. In addition, in the second scheme, an angle corresponding to the actual angle of arrival of [60, 30] may not be indicated, whereas in the first scheme, the angle 950a corresponding to the actual angle of arrival may be confirmed. The second scheme causes the above-described error because the second scheme uses only *ϕ*_{*y*_{0,0}} = *ϕ_{H}* without an operation due to the correction angle.

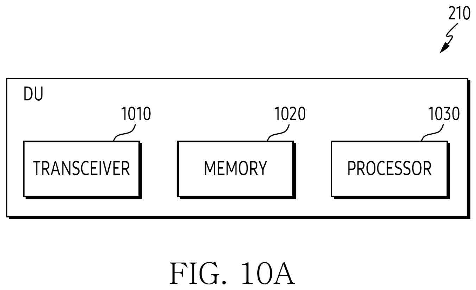

FIG. 10A illustrates examples of components of a DU (e.g., the DU 210). The components of FIG. 10A are a portion of a base station (e.g., the base station 110), and may be understood as a configuration of the DU 210 in FIG. 10A. Hereinafter, terms such as '... unit' and '... equipment' mean a unit for processing at least one function or operation, and the unit may be implemented as hardware, software, or a combination of hardware and software.

Referring to FIG. 10A, the DU 210 includes a transceiver 1010, memory 1020, and a processor 1030.

The transceiver 1010 may perform functions for transmitting and receiving a signal in a wired communication environment. The transceiver 1010 may include a wired interface for controlling a direct connection between devices through a transmission medium (e.g., a copper wire, or an optical fiber). For example, the transceiver 1010 may transmit an electrical signal to another device through a copper wire, or may perform a conversion between an electrical signal and an optical signal. The DU 210 may perform communication with a radio unit (RU) through the transceiver 1010.

The transceiver 1010 may also perform functions for transmitting and receiving a signal in a wireless communication environment. For example, the transceiver 1010 may perform a function for converting between a baseband signal and a bit sequence according to a physical layer specification of a system. For example, when transmitting data, the transceiver 1010 may generate complex symbols by encoding and modulating a transmit bit sequence. In addition, when receiving data, the transceiver 1010 may restore the received bit sequence through demodulation and decoding of the baseband signal. In addition, the transceiver 1010 may include multiple transmission and reception paths.

The transceiver 1010 may transmit and receive a signal. For example, the transceiver 1010 may transmit a management plane (M-plane) message. For example, the transceiver 1010 may transmit a management plane (S-plane) message. For example, the transceiver 1010 may transmit a control plane (C-plane) message. For example, the transceiver 1010 may transmit a user plane (U-plane) message. For example, the transceiver 1010 may receive the user plane message. Although only the transceiver 1010 is illustrated in FIG. 10A, according to another implementation example, the DU 210 may include two or more transceivers.

The transceiver 1010 transmits and receives a signal as described above. Accordingly, all or a portion of the transceiver 1010 may be referred to as a communication unit, a transmission unit, a reception unit, or a transceiver unit. In addition, in the following description, transmission and reception performed through a wireless channel are used to include that processing as described above is performed by the transceiver 1010.

Although not illustrated in FIG. 10A, the transceiver 1010 may further include a backhaul transceiver for connection to a core network or another base station. The backhaul transceiver may provide an interface for performing communication with other nodes in a network. That is, the backhaul transceiver converts a bit sequence transmitted from a base station to another node, for example, another access node, the another base station, an upper node, or the core network, into a physical signal, and converts the physical signal received from the another node into a bit sequence.

The memory 1020 stores data such as a basic program, an application program, and configuration information for an operation of the DU 210. The memory 1020 may be referred to as a storage unit. The memory 1020 may be configured as a volatile memory, a non-volatile memory, or a combination of a volatile memory and a non-volatile memory. In addition, the memory 1020 may provide stored data according to a request of the processor 1030.

The processor 1030 controls overall operations of the DU 210. The processor 1030 may be referred to as a control unit. For example, the processor 1030 transmits and receives a signal through the transceiver 1010 (or through a backhaul communication unit). In addition, the processor 1030 writes data to the memory 1020 and reads data from the memory 1020. In addition, the processor 1030 may perform functions of a protocol stack required in a communication standard. Although only the processor 1030 is illustrated in FIG. 10A, according to another implementation example, the DU 210 may include two or more processors.

A configuration of the DU 210 illustrated in FIG. 10A is only an example, and an example of a DU for performing embodiments of the present disclosure is not limited to the configuration illustrated in FIG. 10A. In some embodiments, some configurations may be added, deleted, or changed.

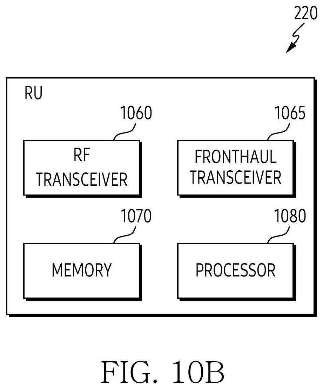

FIG. 10B illustrates examples of components of an RU (e.g., the RU 220). The components of FIG. 10B is a portion of a base station (e.g., the base station 110), and may be understood as the configuration of the RU 220 in FIG. 2. Hereinafter, terms such as '... unit' and '... equipment' mean a unit for processing at least one function or operation, and the unit may be implemented as hardware, software, or a combination of hardware and software.

Referring to FIG. 10B, the RU 220 includes an RF transceiver 1060, a fronthaul transceiver 1065, memory 1070, and a processor 1080.

The RF transceiver 1060 may perform functions for transmitting and receiving a signal through a wireless channel. For example, the RF transceiver 1060 may up-convert a baseband signal into an RF band signal and then transmit the RF band signal through an antenna, and may down-convert the RF band signal received through the antenna into a baseband signal. For example, the RF transceiver 1060 may include a transmission filter, a reception filter, an amplifier, a mixer, an oscillator, a DAC, and an ADC.

The RF transceiver 1060 may include multiple transmission and reception paths. Further, the RF transceiver 1060 may include an antenna unit. The RF transceiver 1060 may include at least one antenna array including a plurality of antenna elements. In terms of hardware, the RF transceiver 1060 may be configured as digital circuitry and analog circuitry (e.g., a radio frequency integrated circuit (RFIC)). Herein, the digital circuitry and the analog circuitry may be implemented as one package. In addition, the RF transceiver 1060 may include multiple RF chains. The RF transceiver 1060 may perform beamforming. The RF transceiver 1060 may apply a beamforming weight to a signal in order to impart directionality according to a configuration of the processor 1080 to the signal to be transmitted and received. According to an embodiment, the RF transceiver 1060 may include a plurality of antennas.

According to an embodiment, the RF transceiver 1060 may transmit and receive a signal on a radio access network. For example, the RF transceiver 1060 may transmit a downlink signal. The downlink signal may include a synchronization signal (SS), a reference signal (RS) (e.g., a cell-specific reference signal (CRS), or a demodulation (DM)-RS), system information (e.g., MIB, SIB, remaining system information (RMSI), other system information (OSI)), a configuration message, control information, or downlink data. In addition, for example, the RF transceiver 1060 may receive an uplink signal. For example, the uplink signal may include the SRS or the DM-RS. According to an embodiment, the RF transceiver 1060 may receive SRSs through the plurality of antennas included in the RF transceiver 1060. Although only the RF transceiver 1060 is illustrated in FIG. 10B, according to another implementation example, the RU 220 may include two or more RF transceivers.

The fronthaul transceiver 1065 may transmit and receive a signal. According to an embodiment, the fronthaul transceiver 1065 may transmit and receive a signal on a fronthaul interface. For example, the fronthaul transceiver 1065 may receive a management plane (M-plane) message. For example, the fronthaul transceiver 1065 may receive a management plane (S-plane) message. For example, the fronthaul transceiver 1065 may receive a control plane (C-plane) message. For example, the fronthaul transceiver 1065 may transmit a user plane (U-plane) message. For example, the fronthaul transceiver 1065 may receive the user plane message. Although only the fronthaul transceiver 1065 is illustrated in FIG. 10B, according to another implementation example, the RU 220 may include two or more fronthaul transceivers.

The RF transceiver 1060 and the fronthaul transceiver 1065 transmit and receive a signal as described above. Accordingly, all or a portion of the RF transceiver 1060 and the fronthaul transceiver 1065 may be referred to as a communication unit, a transmission unit, a reception unit, or a transceiver unit. In addition, in the following description, transmission and reception performed through a wireless channel are used to include that processing as described above is performed by the RF transceiver 1060. In the following description, transmission and reception performed through the wireless channel are used to include that processing as described above is performed by the RF transceiver 1060.

The memory 1070 stores data such as a basic program, an application program, and configuration information for an operation of the RU 220. The memory 1070 may be referred to as a storage unit. The memory 1070 may be configured as a volatile memory, a non-volatile memory, or a combination of a volatile memory and a non-volatile memory. In addition, the memory 1070 may provide stored data according to a request of the processor 1080.

The processor 1080 controls overall operations of the RU 220. The processor 1080 may be referred to as a control unit. For example, the processor 1080 transmits and receives a signal through the RF transceiver 1060 or the fronthaul transceiver 1065. In addition, the processor 1080 writes data to the memory 1070 and reads the data from the memory 1070. In addition, the processor 1080 may perform functions of a protocol stack required in a communication standard. Although only the processor 1080 is illustrated in FIG. 10B, according to another implementation example, the RU 220 may include two or more processors. The processor 1080, as a set of instructions or code stored in the memory 1070, may be instructions/code resided in the processor 1080 at least temporarily or a storage space storing the instructions/code, or a portion of circuitry configuring the processor 1080. In addition, the processor 1080 may include various modules for performing communication. The processor 1080 may control the RU 220 to perform operations according to embodiments described below.

A configuration of the RU 220 illustrated in FIG. 10B is only an example, and an example of an RU performing embodiments of the present disclosure is not limited to the configuration illustrated in FIG. 10B. In some embodiments, some configurations may be added, deleted, or changed.

In the present disclosure, a method for determining an angle of arrival of a signal is described by selecting, based on antenna array information, a search range (e.g., a first search range, or a second search range) in which angle ambiguity does not occur, and by searching an angle at which a correlation value is maximized through a sequential search instead of performing a full search within the search range. In an antenna configuration specialized for MIMO performance (e.g., a case that a spacing between antennas in each dimension is greater than 0.5*λ*₀ (*λ*₀ is a wavelength of a signal)), candidate AoAs (i.e., including an actual AoA and AoAs having a mirror relationship) that may occur, may be searched with low complexity. Not only is complexity reduced by using the angle ambiguity, but also, by reflecting an influence between different dimensions (e.g., a vertical dimension, or a horizontal dimension), a more accurate angle of arrival may be estimated.

The effects that can be obtained from the present disclosure are not limited to those described above, and any other effects not mentioned herein will be clearly understood by those having ordinary knowledge in the art to which the present disclosure belongs, from the following description.

In embodiments, an electronic device of a digital unit (DU) is provided. The electronic device may comprise memory storing instructions, at least one transceiver, and at least one processor. The instructions, when executed by the at least one processor, may cause the electronic device to obtain a first angle of arrival (AoA) for a first dimension of a plurality of antennas and a second AoA for a second dimension of the plurality of antennas, identify at least one first candidate AoA associated with the first AoA based on a first spacing between antennas in the first dimension, for each of the at least one first candidate AoA, determine a correction angle for the second AoA in accordance with the first AoA and the first candidate AoA, identify at least one second candidate AoA associated with the second AoA based on the correction angle and a second spacing between antennas in the second dimension, and transmit, through the at least one transceiver to a location management server, a measurement message including the first AoA, the at least one first candidate AoA, the second AoA, and the at least one second candidate AoA.

For example, the correction angle may be determined in accordance with a ratio of a sine value of the first candidate AoA to a sine value of the first AoA.

For example, the correction angle may be determined based on a following equation.$sin {ϕ}_{{y}_{k , 0}} = \frac{sin {θ}_{V} sin {ϕ}_{H}}{sin {θ}_{{x}_{k}}}$

*ϕ*_{*y*_{*k,*0}} may denote the correction angle, *θ_{xₖ}* may denote the first candidate AoA of the at least one first candidate AoA, k may denote an index of the first candidate AoA, *θ_{V}* may denote the first AoA, and *ϕ_{H}* may denote the second AoA.

For example, a difference between a sine value of the second candidate AoA of the at least one second candidate AoA and a sine value of the correction angle may correspond to an integer multiple of a ratio of a wavelength to a product of the sine value of the first candidate AoA and the second spacing.

For example, the second candidate AoA may be determined based on a following equation.${ϕ}_{{y}_{k , g}} = {sin}^{- 1} \left(sin {ϕ}_{{y}_{k , 0}}+\frac{g}{b sin {θ}_{{x}_{k}}}\right)$

*ϕ_{y_{k,g}}* may denote a second candidate AoA corresponding to the first candidate AoA, g may denote an index of the second candidate AoA, *θ_{V}* may denote the first AoA, *ϕ_{H}* may denote the second AoA, b may denote a ratio of the second spacing to a wavelength, and g may be an integer.

For example, the g is an integer satisfying a following equation. $\left⌈-b sin {θ}_{{x}_{k}}\left(1+sin {ϕ}_{{y}_{k , 0}}\right)\right⌉ \leq g \leq \left⌊b sin {θ}_{{x}_{k}}\left(1-sin {ϕ}_{{y}_{k , 0}}\right)\right⌋$

*ϕ*_{*y*_{*k*,0}} may denote the correction angle, b may denote a ratio of the second spacing to a wavelength, and *θ_{xₖ}* may denote the first candidate AoA of the at least one first candidate AoA.

For example, the first AoA may be obtained within a first search range for the first dimension, determined based on the first spacing. The second AoA may be obtained within a second search range for the second dimension, determined based on the second spacing.

For example, the first AoA may be identified among first values of the first search range based on a correlation operation using received signals. The second AoA may be identified among second values of the second search range based on a correlation operation using the received signals.

For example, the first AoA and the at least one first candidate AoA may correspond to zenith AoAs of the measurement message. The second AoA and the at least one second candidate AoA may correspond to azimuth AoAs of the measurement message. The plurality of antennas may correspond to antenna elements of a two-dimensional (2D) array antenna arranged in the first dimension and the second dimension.

For example, the instructions, when executed by the at least one processor, may cause the electronic device to receive, through the at least one transceiver from the location management server, a measurement request message including measurement type information indicating multiple uplink (UL)-AoAs, and transmit, through the at least one transceiver to the location management server, the measurement message, in response to the measurement request message.

For example, the first AoA, the at least one first candidate AoA, the second AoA, and the at least one second candidate AoA may be measured based on uplink signals from a terminal. The uplink signals may include sounding reference signals (SRSs) or positioning SRSs.

For example, the instructions, when executed by the at least one processor, may cause the electronic device to identify at least another second candidate AoA associated with the second AoA based on the first AoA, the second AoA, and the second spacing. The measurement message may further include the at least another second candidate AoA.

For example, the electronic device may comprise a digital unit (DU). The plurality of antennas may be connected to a radio unit (RU) connected to the DU through a fronthaul interface.

For example, the plurality of antennas may be equipped on the electronic device.

In embodiments, a method performed by a digital unit (DU) is provided. The method may comprise obtaining a first angle of arrival (AoA) for a first dimension of a plurality of antennas and a second AoA for a second dimension of the plurality of antennas and identifying at least one first candidate AoA associated with the first AoA based on a first spacing between antennas in the first dimension. The method may comprise, for each of the at least one first candidate AoA, determining a correction angle for the second AoA in accordance with the first AoA and the first candidate AoA, and identifying at least one second candidate AoA associated with the second AoA based on the correction angle and a second spacing between antennas in the second dimension. The method may comprise transmitting, to a location management server, a measurement message including the first AoA, the at least one first candidate AoA, the second AoA, and the at least one second candidate AoA.

For example, the correction angle may be determined in accordance with a ratio of a sine value of the first candidate AoA to a sine value of the first AoA.

For example, the correction angle may be determined based on a following equation.$sin {ϕ}_{{y}_{k , 0}} = \frac{sin {θ}_{V} sin {ϕ}_{H}}{sin {θ}_{{x}_{k}}}$

*ϕ*_{*y*_{*k*,0}} may denote the correction angle, *θ_{xₖ}* may denote the first candidate AoA of the at least one first candidate AoA, k may denote an index of the first candidate AoA, *θ_{V}* may denote the first AoA, and *ϕ_{H}* may denote the second AoA.

For example, a difference between a sine value of the second candidate AoA of the at least one second candidate AoA and a sine value of the correction angle may correspond to an integer multiple of a ratio of a wavelength to a product of the sine value of the first candidate AoA and the second spacing.

For example, the first AoA and the at least one first candidate AoA may correspond to zenith AoAs of the measurement message. The second AoA and the at least one second candidate AoA may correspond to azimuth AoAs of the measurement message. The plurality of antennas may correspond to antenna elements of a two-dimensional (2D) array antenna arranged in the first dimension and the second dimension.

In embodiments, a non-transitory computer readable storage medium is provided. The non-transitory computer readable storage medium may store instructions that, when executed by a processor of a digital unit (DU), cause the DU to perform operations comprising obtaining a first angle of arrival (AoA) for a first dimension of a plurality of antennas and a second AoA for a second dimension of the plurality of antennas and identifying at least one first candidate AoA associated with the first AoA based on a first spacing between antennas in the first dimension, for each of the at least one first candidate AoA, determining a correction angle for the second AoA in accordance with the first AoA and the first candidate AoA, and identifying at least one second candidate AoA associated with the second AoA based on the correction angle and a second spacing between antennas in the second dimension, and transmitting, to a location management server, a measurement message including the first AoA, the at least one first candidate AoA, the second AoA, and the at least one second candidate AoA.

In embodiments, an electronic device of a digital unit (DU) is provided. The electronic device may comprise at least one transceiver including at least one communication circuitry and at least one processor including at least one processing circuitry. The at least one processor may be configured to obtain a first angle of arrival (AoA) for a first dimension of a plurality of antennas and a second AoA for a second dimension of the plurality of antennas, identify at least one first candidate AoA associated with the first AoA based on a first spacing between antennas in the first dimension, for each of the at least one first candidate AoA, determine a correction angle for the second AoA in accordance with the first AoA and the first candidate AoA, identify at least one second candidate AoA associated with the second AoA based on the correction angle and a second spacing between antennas in the second dimension, and transmit, through the at least one transceiver to a location management server, a measurement message including the first AoA, the at least one first candidate AoA, the second AoA, and the at least one second candidate AoA.

In one or more embodiments, at least one of the components described in one or more of the preceding drawings may be configured to perform one or more operations, techniques, processes, and/or methods as described in the present disclosure. For example, a processor (e.g., a baseband processor) described in the present disclosure in connection with one or more of the preceding drawings may be configured to operate according to one or more examples described in the present disclosure. For another example, circuitry associated with user equipment (UE), a base station, or a network element as described above in connection with one or more of the preceding drawings may be configured to operate according to one or more examples described herein.

Any of the embodiments described above may be combined with any other embodiment (or a combination of embodiments) unless explicitly stated otherwise. The foregoing description of one or more implementations is provided for illustration and description, and is not intended to limit the scope of the embodiments or to be exhaustive to the precise forms disclosed. Modifications and variations are possible in light of the above teachings or may be obtained from practice of various embodiments.

Methods according to embodiments described in claims or specifications of the present disclosure may be implemented as a form of hardware, software, or a combination of hardware and software.

In a case of implementing as software, a computer-readable storage medium (e.g., a non-transitory computer-readable storage medium) for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. An electronic device of a digital unit (DU), comprising:
memory storing instructions;
at least one transceiver; and
at least one processor,
wherein the instructions, when executed by the at least one processor, cause the electronic device to:
obtain a first angle of arrival (AoA) for a first dimension of a plurality of antennas and a second AoA for a second dimension of the plurality of antennas,
identify at least one first candidate AoA associated with the first AoA based on a first spacing between antennas in the first dimension,
for each of the at least one first candidate AoA,
determine a correction angle for the second AoA in accordance with the first AoA and the first candidate AoA,
identify at least one second candidate AoA associated with the second AoA based on the correction angle and a second spacing between antennas in the second dimension;
transmit, through the at least one transceiver to a location management server, a measurement message including the first AoA, the at least one first candidate AoA, the second AoA, and the at least one second candidate AoA.

2. The electronic device of claim 1, wherein the correction angle is determined in accordance with a ratio of a sine value of the first candidate AoA to a sine value of the first AoA.

3. The electronic device of claim 2, wherein the correction angle is determined based on a following equation: $sin {ϕ}_{{y}_{k , 0}} = \frac{sin {θ}_{V} sin {ϕ}_{H}}{sin {θ}_{{x}_{k}}}$ *ϕ*_{*y*_{*k,*0}} denotes the correction angle, denotes the first candidate AoA of the at least one first candidate AoA, k denotes an index of the first candidate AoA, *θ_{V}* denotes the first AoA, and *ϕ_{H}* denotes the second AoA.

4. The electronic device of claim 1,
wherein a difference between a sine value of the second candidate AoA of the at least one second candidate AoA and a sine value of the correction angle corresponds to an integer multiple of a ratio of a wavelength to a product of the sine value of the first candidate AoA and the second spacing.

5. The electronic device of claim 4, wherein the second candidate AoA is determined based on a following equation: ${ϕ}_{{y}_{k , g}} = {sin}^{- 1} \left(sin {ϕ}_{{y}_{k , 0}}+\frac{g}{b sin {θ}_{{x}_{k}}}\right)$ *ϕ_{y_{k,g}}* denotes a second candidate AoA corresponding to the first candidate AoA, g denotes an index of the second candidate AoA, *θ_{V}* denotes the first AoA, *ϕ_{H}* denotes the second AoA, b denotes a ratio of the second spacing to a wavelength, and g is an integer.

6. The electronic device of claim 5,
wherein the g is an integer satisfying a following equation: $\left⌈-b sin {θ}_{{x}_{k}}\left(1+sin {ϕ}_{{y}_{k , 0}}\right)\right⌉ \leq g \leq \left⌊b sin {θ}_{{x}_{k}}\left(1-sin {ϕ}_{{y}_{k , 0}}\right)\right⌋$
*ϕ*_{*y*_{*k*,0}} denotes the correction angle, b denotes a ratio of the second spacing to a wavelength, and *θ_{xₖ}* denotes the first candidate AoA of the at least one first candidate AoA.

7. The electronic device of claim 1,
wherein the first AoA is obtained within a first search range for the first dimension, determined based on the first spacing, and
wherein the second AoA is obtained within a second search range for the second dimension, determined based on the second spacing.

8. The electronic device of claim 7,
wherein the first AoA is identified among first values of the first search range based on a correlation operation using received signals, and
wherein the second AoA is identified among second values of the second search range based on a correlation operation using the received signals.

9. The electronic device of claim 1,
wherein the first AoA and the at least one first candidate AoA correspond to zenith AoAs of the measurement message,
wherein the second AoA and the at least one second candidate AoA correspond to azimuth AoAs of the measurement message, and
wherein the plurality of antennas correspond to antenna elements of a two-dimensional (2D) array antenna arranged in the first dimension and the second dimension.

10. The electronic device of claim 1,
wherein the instructions, when executed by the at least one processor, cause the electronic device to:
receive, through the at least one transceiver from the location management server, a measurement request message including measurement type information indicating multiple uplink (UL)-AoAs, and
transmit, through the at least one transceiver to the location management server, the measurement message, in response to the measurement request message.

11. The electronic device of claim 1,
wherein the first AoA, the at least one first candidate AoA, the second AoA, and the at least one second candidate AoA are measured based on uplink signals from a terminal, and
wherein the uplink signals include sounding reference signals (SRSs) or positioning SRSs.

12. The electronic device of claim 1,
wherein the instructions, when executed by the at least one processor, cause the electronic device to identify at least another second candidate AoA associated with the second AoA based on the first AoA, the second AoA, and the second spacing, and
wherein the measurement message further includes the at least another second candidate AoA.

13. The electronic device of claim 1,
wherein the electronic device comprises a digital unit (DU), and
wherein the plurality of antennas are connected to a radio unit (RU) connected to the DU through a fronthaul interface.

14. The electronic device of claim 1, wherein the plurality of antennas are equipped on the electronic device.

15. A method performed by a digital unit (DU), the method comprising:
obtaining a first angle of arrival (AoA) for a first dimension of a plurality of antennas and a second AoA for a second dimension of the plurality of antennas,
identifying at least one first candidate AoA associated with the first AoA based on a first spacing between antennas in the first dimension,
for each of the at least one first candidate AoA,
determining a correction angle for the second AoA in accordance with the first AoA and the first candidate AoA,
identifying at least one second candidate AoA associated with the second AoA based on the correction angle and a second spacing between antennas in the second dimension;
transmitting, to a location management server, a measurement message including the first AoA, the at least one first candidate AoA, the second AoA, and the at least one second candidate AoA.
